# EUROPEAN PATENT APPLICATION

(11) **EP 4 718 350 A1**
(43) Date of publication of application: **01.04.2026**
(21) Application number: 25189465.5
(22) Date of filing: 14.07.2025
(51) Int. Cl.: G06Q 10/063, B64D 43/00, B64D 45/00, B64F 5/60, G05B 23/02, G06Q 10/20, G07C 5/00, G08B 21/02, G08G 5/21, G08G 5/26, G08G 5/55, G09B 19/00

(54) **SCHEDULED MAINTENANCE CREDIT DATA HEALTH MANAGEMENT AND TRACKING OF COMPLIANCE LEAD TIME REMAINING**

(30) Priority: 26.09.2024 US 202463699196 P
(71) Applicant: The Boeing Company, Arlington, VA 22202 (US)
(72) Inventor: HOUZENGA, Nyssa A., Arlington, 22202 (US); LEE, Pun Kin, Arlington, 22202 (US); FILC, Robert, Arlington, 22202 (US)
(74) Representative: Bryn-Jacobsen, Caelia

(57) **Abstract**

Tracking a maintenance compliance window of opportunity is provided. The method comprises receiving an alert in response to an aircraft system exceeding an operational threshold or failing to transmit a report. A lead time countdown to a compliance deadline is started in prescribed units. Elapsed and remaining units, out of a total number of allotted units in the lead time, are calculated based on reports from sources defining an operating cycle of the aircraft system. The countdown is displayed in a user interface as a normalized sliding scale of elapsed percentage of total number of allotted units in the lead time. The remaining units out the total number of allotted units are also displayed in the user interface. The countdown is ceased in response to the first of: resolution of the alert or the countdown reaching the compliance deadline, wherein the lead time has completely elapsed.

## Description

### CROSS-REFERENCE TO RELATED APPLICATION

This application is related to the following U.S. Patent Application entitled "Scheduled Maintenance Credit User Interface" attorney docket no. 24-0428-US-PSP, filed even date hereof, assigned to the same assignee.

### BACKGROUND INFORMATION

### Technical Field:

The present disclosure relates generally to aircraft maintenance, and more specifically to an interface for monitoring maintenance tasks and providing notifications for when maintenance must be completed.

### Background:

Aircraft Health Management (AHM) system is a comprehensive solution designed to monitor and manage the health and performance of an aircraft in real-time. The AHM system collects and analyzes data from various aircraft systems to detect anomalies, predict potential failures, and optimize maintenance activities. This capability is crucial for airlines to ensure operational efficiency, enhance safety, and reduce maintenance costs.

ACARS (Aircraft Communications Addressing and Reporting System) is a digital datalink system used for transmitting messages between aircraft and ground stations. This system was introduced to replace voice communications and has since become a critical component of modern aviation communication. Airlines use ACARS to monitor the status of their aircraft, send operational instructions, and receive data on the aircraft's position, speed, altitude, and other parameters. ACARS can transmit data about the aircraft's systems and performance, allowing maintenance teams to be informed of any issues before the aircraft lands. This data can be used to schedule maintenance, reducing aircraft downtime.

### SUMMARY

An illustrative example provides a computer-implemented method of tracking a maintenance compliance window of opportunity. The method comprises receiving an alert in response to an aircraft system on an aircraft exceeding an operational threshold or failing to transmit a report. A countdown of a lead time from the alert to a compliance deadline to address the alert is started in prescribed units. Elapsed and remaining units, out of a total number of allotted units in the lead time, are calculated based on reports from a number of data sources on the aircraft that define an operating cycle of the aircraft system. The countdown is displayed in a user interface as a normalized sliding scale of elapsed percentage of total number of allotted units in the lead time. The remaining units out the total number of allotted units are also displayed in the user interface. The countdown is ceased in response to the first of: resolution of the alert or the countdown reaching the compliance deadline, wherein the lead time has completely elapsed.

Another illustrative example provides a system for tracking a maintenance compliance window of opportunity. The system comprises a storage device that stores program instructions and one or more processors operably connected to the storage device and configured to execute the program instructions to cause the system to: receive an alert in response to an aircraft system on an aircraft exceeding an operational threshold or failing to transmit a report; start a countdown, in prescribed units, of a lead time from the alert to a compliance deadline to address the alert; calculate elapsed and remaining units, out of a total number of allotted units in the lead time, based on reports from a number of data sources on the aircraft that define an operating cycle of the aircraft system; display, in a user interface, the countdown as a normalized sliding scale of elapsed percentage of total number of allotted units in the lead time; display, in the user interface, the remaining units out the total number of allotted units; and cease the countdown in response to the first of: resolution of the alert; or the countdown reaching the compliance deadline, wherein the lead time has completely elapsed.

Another illustrative example provides a computer program product for tracking a maintenance compliance window of opportunity. The computer program product comprises a computer-readable storage medium having program instructions embodied thereon to perform the operations of: receiving an alert in response to an aircraft system on an aircraft exceeding an operational threshold or failing to transmit a report; starting a countdown, in prescribed units, of a lead time from the alert to a compliance deadline to address the alert; calculating elapsed and remaining units, out of a total number of allotted units in the lead time, based on reports from a number of data sources on the aircraft that define an operating cycle of the aircraft system; displaying, in a user interface, the countdown as a normalized sliding scale of elapsed percentage of total number of allotted units in the lead time; displaying, in the user interface, the remaining units out the total number of allotted units; and ceasing the countdown in response to the first of: resolution of the alert; or the countdown reaching the compliance deadline, wherein the lead time has completely elapsed.

The features and functions can be achieved independently in various examples of the present disclosure or may be combined in yet other examples in which further details can be seen with reference to the following description and drawings.

### BRIEF DESCRIPTION OF THE DRAWINGS

The novel features believed characteristic of the illustrative examples are set forth in the appended claims. The illustrative examples, however, as well as a preferred mode of use, further objectives and features thereof, will best be understood by reference to the following detailed description of an illustrative example of the present disclosure when read in conjunction with the accompanying drawings, wherein:
**Figure 1** is an illustration of a block diagram of an Aircraft Health Maintenance system in accordance with an illustrative example;
**Figure 2** depicts a process flow for the processing and resolution of alerts in accordance with an illustrative example;
**Figure 3** depicts a scheduled maintenance interface for new alerts in accordance with an illustrative example;
**Figure 4A** depicts a threshold alert details pane in accordance with an illustrative example;
**Figure 4B** depicts a workflow status drop down menu in accordance with an illustrative example;
**Figure 5A** depicts a mark as actioned status details pane in accordance with an illustrative example;
**Figure 5B** depicts an update status details pane in accordance with an illustrative example;
**Figure 5C** depicts a mark as resolved status details pane in accordance with an illustrative example;
**Figure 5D** depicts a mark for rework status details pane in accordance with an illustrative example;
**Figure 6A** depicts an Actioned Alerts dashboard user interface for actioned alerts in accordance with an illustrative example;
**Figure 6B** depicts an Actioned Alerts dashboard user interface for actioned alerts in accordance with an illustrative example;
**Figure 7** depicts a "no report" details pane when a report for the associated aircraft system has not been received for a specified number of flight cycles in accordance with an illustrative example;
**Figure 8** depicts a flowchart illustrating the required actions to be performed for various types of transmission outages from an aircraft;
**Figure 9A** depicts a fleet data health display in accordance with an illustrative example;
**Figure 9B** depicts a fleet data health display in accordance with an illustrative example;
**Figure 10A** depicts an airplane data health details pane in accordance with an illustrative example;
**Figure 10B** depicts a Data Outage Reason drop down menu in accordance with an illustrative example
**Figure 11** depicts the specific details pane for an ACARS MEL category of data outage in accordance with an illustrative example;
**Figure 12** depicts an airplane data health details pane after entry of ACARS MEL related data outage in accordance with an illustrative example;
**Figure 13** depicts an update details pane for a pending categorized data outage in accordance with an illustrative example;
**Figure 14** depicts an airplane data health details pane upon resumption of data reception in accordance with an illustrative example;
**Figure 15** depicts a resolution details pane for a pending categorized data outage in accordance with an illustrative example;
**Figure 16** depicts the specific details pane for a maintenance check category of data outage in accordance with an illustrative example;
**Figure 17** depicts an airplane data health details pane after verification of maintenance check status information in accordance with an illustrative example;
**Figure 18** depicts an airplane data health details pane indicating an updated verification of maintenance check status in accordance with an illustrative example;
**Figure 19** depicts an update details pane for a pending maintenance check in accordance with an illustrative example;
**Figure 20A** depicts automatic resolution notification in the fleet data health display in accordance with an illustrative example;
**Figure 20B** depicts automatic resolution notification in the fleet data health display in accordance with an illustrative example;
**Figure 21** depicts a Resolved status details pane providing details of an automatic resolution of a data outage in accordance with an illustrative example;
**Figure 22** depicts the specific details pane for an Other category of data outage in accordance with an illustrative example;
**Figure 23** depicts an airplane data health details pane after entry of Other related data outage in accordance with an illustrative example;
**Figure 24** depicts an update details pane for an Other categorized data outage in accordance with an illustrative example;
**Figure 25** depicts the specific details pane for an Other category of data outage in accordance with an illustrative example;
**Figure 26** depicts an airplane data health details pane after entry of Out of Service related data outage in accordance with an illustrative example;
**Figure 27** depicts an update details pane for an Out of Service categorized data outage in accordance with an illustrative example;
**Figure 28** depicts a flowchart illustrating a process for tracking a maintenance compliance window of opportunity in accordance with an illustrative example;
**Figure 29** depicts a block diagram of a data processing system is depicted in accordance with an illustrative example;
**Figure 30** is an illustration of an aircraft manufacturing and service method in accordance with an illustrative example; and
**Figure 31** is an illustration of a block diagram of an aircraft in which an illustrative example may be implemented.

### DETAILED DESCRIPTION

The illustrative examples recognize and take into account that airline operators must schedule regular maintenance checks for aircraft systems. These checks incur costs associated with labor and premature replacement of system components.

The illustrative examples provide a method of using incoming data to measure and ensure maintenance compliance for both confirming the necessary receipt of data and calculating lead time remaining for compliance. Tracking of the data health is done in multiple ways to cover the different reasons that data can be missing and is monitored in the context of the lead time published for the related individual AHM tasks from the Maintenance Review Board Report (MRBR). The compliance window is calculated from data received in addition to the data required for the individual AHM tasks (threshold alerts). Because the lead time for compliance can be measured in calendar time, flight cycles, or flight hours, a measure of each of those units is required for each tail enrolled in the Scheduled Maintenance Credit program. The remaining "time" (as measured in hours/flight hours/flight cycles) can then be used to classify open tasks according to the amount of time that is remaining. In addition, the remaining 'time' can be used to indicate if the lead time has elapsed and the task is out of compliance.

The illustrative examples also provide a user interface to notify the airline operator when maintenance needs to be performed for aircraft based on sensor readings and flight history for the systems being monitored, eliminating the need for the regularly scheduled checks that are mandated by the FAA.

The illustrative examples use a prognostic alerting engine in Airplane Health Management (AHM). The alerting engine generates the notifications that are displayed to the operator based on real time data received while the aircraft is in flight. This illustrative examples also rely on a new capability to calculate airworthiness compliance status and risk level.

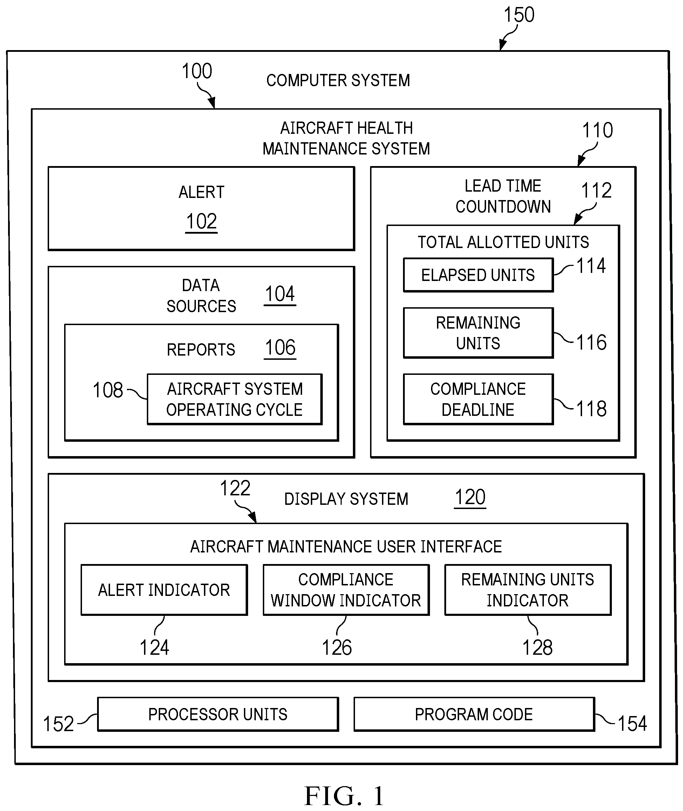

With reference now to **Figure 1****,** an illustration a block diagram of an Aircraft Health Maintenance system is depicted in accordance with an illustrative example. AHM system **100** generates an alert **102** regarding an aircraft system that exceeded a specified operational threshold for an associated parameter of that system. The alert **102** might also be triggered when a report for the associated system has not been received for a specified number of flight cycles.

Upon generation of the alert **102,** AHM system **100** begins a lead time countdown **110.** Lead time countdown **110** comprises a total amount of allotted unite **112** which might comprise units of time (hours) or flight cycles. The type of units and the total allotment of them depend on the specific aircraft system in question. The total allotted units **112** represent the window of opportunity available to an aircraft operator to address the issue underlying the alert **102** in order to keep the aircraft in compliance before reaching a compliance deadline **118.** Failure to resolve the underlying problem before the countdown deadline **118** will result in the aircraft being out of compliance, which will require the aircraft to be grounded.

During the lead time countdown **110,** AHM system **100** calculates elapsed unit **114** and remaining units **116,** which may be displayed concurrently in aircraft maintenance user interface **122.**

AHM system **100** may calculate countdown **110** using reports **106** from various data sources **104** that define an aircraft system operating cycle **108.** For example, sensor measurements of weight on/weight off wheels might be used in calculating flight hours or flight cycles.

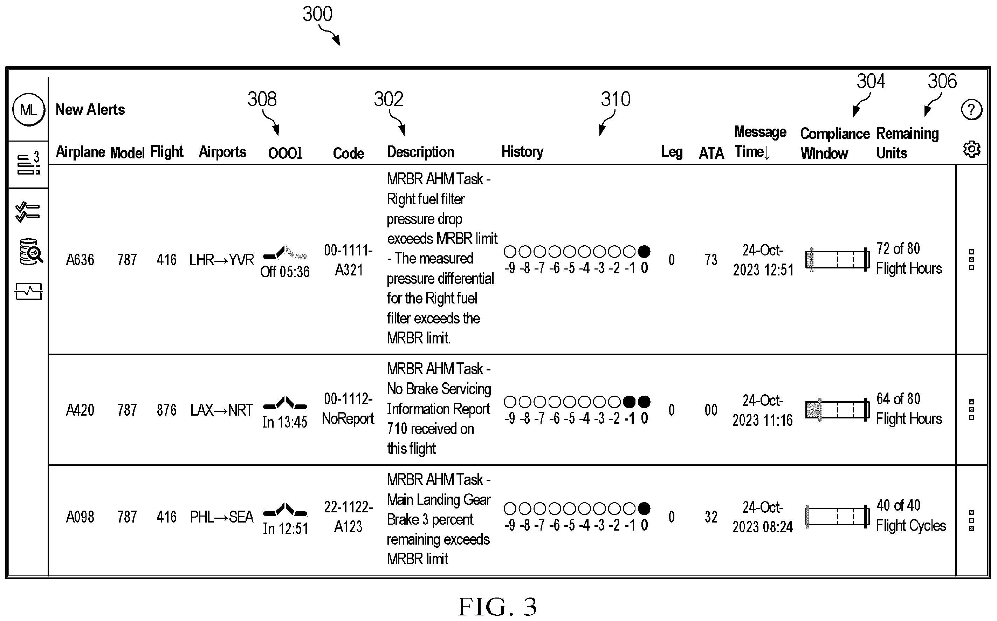

Aircraft maintenance user interface **122** displays alert **102** in an alert indicator **124** (see **Figure 3**). Aircraft maintenance user interface **100** also displays compliance window indicator **126** that visually depicts elapsed units **114** of countdown **110** as a normalized sliding scale of elapsed percentage of total allotted units **112** in the lead time. Aircraft maintenance user interface **100** also displays elapsed units **114** in a remaining units indicator **128** that complements the compliance window indicator **126** by displaying the number of elapsed units **114** out of the total allotted units **112.**

Aircraft maintenance user interface **122** is generated by display system **120.** Display system **120** is a physical hardware system and includes one or more display devices on which user aircraft maintenance user interface **122** can be displayed.

The display devices in display system **120** can include at least one of a light emitting diode (LED) display, a liquid crystal display (LCD), an organic light emitting diode (OLED) display, a computer monitor, a projector, a flat panel display, a heads-up display (HUD), a head-mounted display (HMD), or some other suitable device that can output information for the visual presentation of information.

Aircraft maintenance user interface **122** can be implemented in software, hardware, firmware, or a combination thereof. When software is used, the operations performed by Aircraft maintenance user interface **122** can be implemented in program code configured to run on hardware, such as a processor unit. When firmware is used, the operations performed by Aircraft maintenance user interface **122** can be implemented in program code and data and stored in persistent memory to run on a processor unit. When hardware is employed, the hardware can include circuits that operate to perform the operations in Aircraft maintenance user interface **122.**

In the illustrative examples, the hardware can take a form selected from at least one of a circuit system, an integrated circuit, an application specific integrated circuit (ASIC), a programmable logic device, or some other suitable type of hardware configured to perform a number of operations. With a programmable logic device, the device can be configured to perform the number of operations. The device can be reconfigured at a later time or can be permanently configured to perform the number of operations. Programmable logic devices include, for example, a programmable logic array, a programmable array logic, a field programmable logic array, a field programmable gate array, and other suitable hardware devices. Additionally, the processes can be implemented in organic components integrated with inorganic components and can be comprised entirely of organic components excluding a human being. For example, the processes can be implemented as circuits in organic semiconductors.

Computer system 150 is a physical hardware system and includes one or more data processing systems. When more than one data processing system is present in computer system **150,** those data processing systems are in communication with each other using a communications medium. The communications medium can be a network. The data processing systems can be selected from at least one of a computer, a server computer, a tablet computer, or some other suitable data processing system.

As depicted, computer system **150** includes a number of processor units **152** that are capable of executing program code **154** implementing processes in the illustrative examples. As used herein a processor unit in the number of processor units **152** is a hardware device and is comprised of hardware circuits such as those on an integrated circuit that respond and process instructions and program code that operate a computer. When a number of processor units **152** execute program code **154** for a process, the number of processor units **152** is one or more processor units that can be on the same computer or on different computers. In other words, the process can be distributed between processor units on the same or different computers in a computer system. Further, the number of processor units **152** can be of the same type or different type of processor units. For example, a number of processor units can be selected from at least one of a single core processor, a dual-core processor, a multi-processor core, a general-purpose central processing unit (CPU), a graphics processing unit (GPU), a digital signal processor (DSP), or some other type of processor unit.

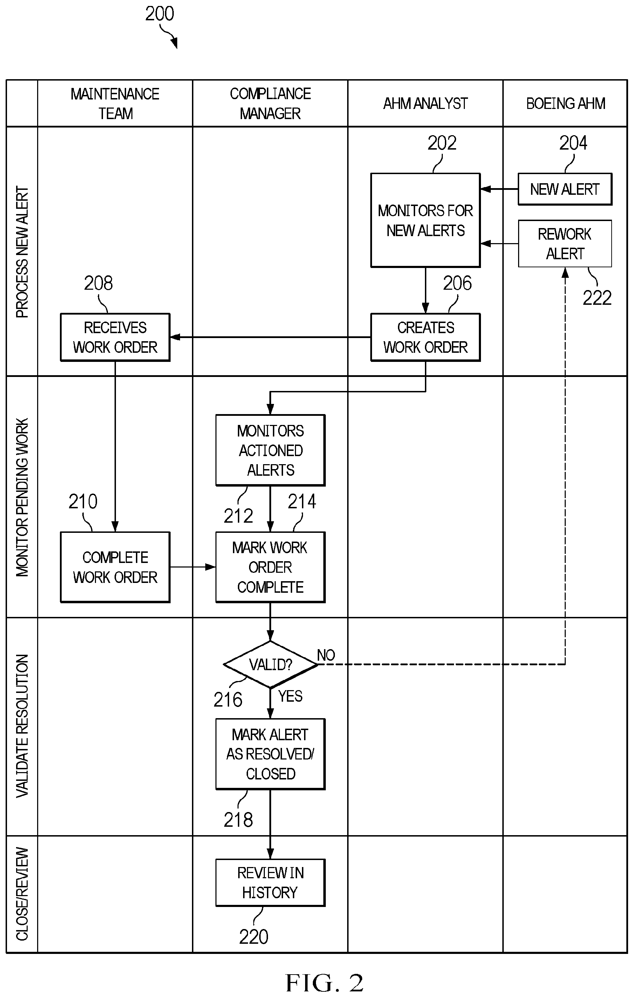

**Figure 2** depicts a process flow for the processing and resolution of threshold alerts in accordance with an illustrative example. Aircraft maintenance user interface **100** can be used to monitor and help implement the operations in process **200.**

An AHM analyst monitors for new alerts (operation **202**). When a new alert **204** is received, the AHM analyst uses the aircraft maintenance user interface **100** to document the work order (created in the airline maintenance planning system) related to the alert (operation **206**).

The work orders are fed to a compliance manager and maintenance team. The maintenance team receives the work order (operation **208**) and completes the work order (operation **210**).

A compliance manager can use the aircraft maintenance user interface **100** to monitor actioned alerts (operation **212**) and mark work orders as complete (operation **214**). The compliance manager also validates the work to ensure that the problem that generated the alert **204** has in fact been resolved (operation **216**). If the problem is solved, the alert is marked as resolved and closed (operation **218**) and can be reviewed in the AHM history (operation **220**).

If the completed work order did not resolve the problem, a rework alert **222** is generated to reinitiate process **200.**

**Figure 3** depicts a scheduled maintenance interface for new alerts in accordance with an illustrative example. Interface **300** is an example interface for displaying new threshold and "no report" alerts.

Interface **300** includes an alert indicator **302** that displays a threshold or "no report" alert related to an aircraft system that must be addressed for maintenance compliance of an aircraft.

A compliance window indicator **304** displays a normalized sliding scale of elapsed percentage of a lead time between the time the alert was received and a maintenance compliance deadline. In the present example, the compliance window starts on the left and progresses to the deadline on the right. If the issue causing the alert is not resolved by the time the indicator reaches the deadline, the aircraft in question must be taken out of service, resulting in lost operational time and revenues.

Remaining units indictor **306** displays the number of used units (e.g., elapsed hours, flight hours, or flight cycles) out of a total number of allotted units that measure the remaining lead time window of opportunity. Remaining unit indicator **306** displays the numbers that are being counted down visually in the normalized sliding scale of compliance window indicator

**304.**

Flight phase indicator **308** displays the phase of a flight during which the threshold alert is generated. In the present example, the flight phases are divided into OOOI, standing for Out (out of gate), Off (take-off), On (landing, "weight on wheels"), and In (arrival at gate).

History indicator **310** displays the operational history of the aircraft system leading up to the beginning of the issue triggering the threshold alert. History indicator **310** denotes flight legs leading up to the current flight leg of the aircraft at the right end of the indicator (flight leg 0). A black filled circle history indicator denotes an alert generated during that flight leg.

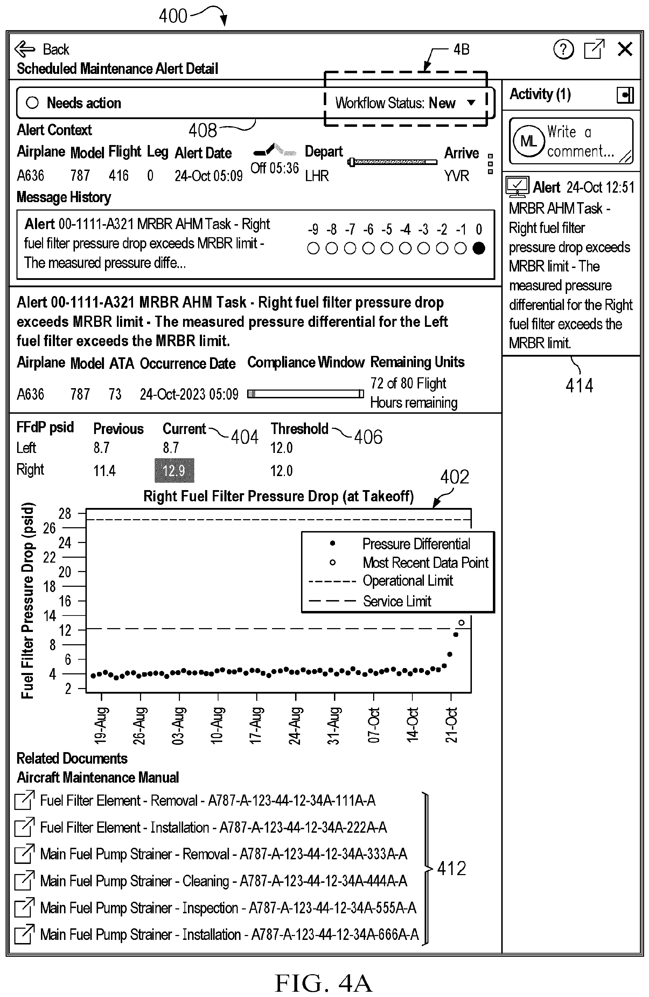

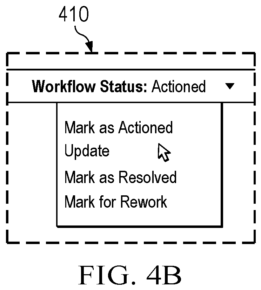

**Figure 4B** depicts a threshold alert details pane in accordance with an illustrative example. Alert details pane **400** slides into view as a second layer in response to clicking on the threshold alert title displayed in alert indicator **302** in interface **300.** Alert details pane **400** contains a history **402** of the aircraft system leading up to the threshold alert. A current parametric value **404** of the aircraft system is displayed relative to a threshold value **406.**

Compliance status **408** indicates the current status of the workflow to address the threshold alert. The compliance status **408** can be updated via a drop down menu **410** for selecting a status display, as shown in **Figure 4B****.**

Alert details pane **400** also contains links to documents **412** detailing required maintenance tasks related to the aircraft system to resolve the threshold alert.

Alert details pane **400** also comprises a description **414** of the threshold alert and activity relating to resolving the threshold alert.

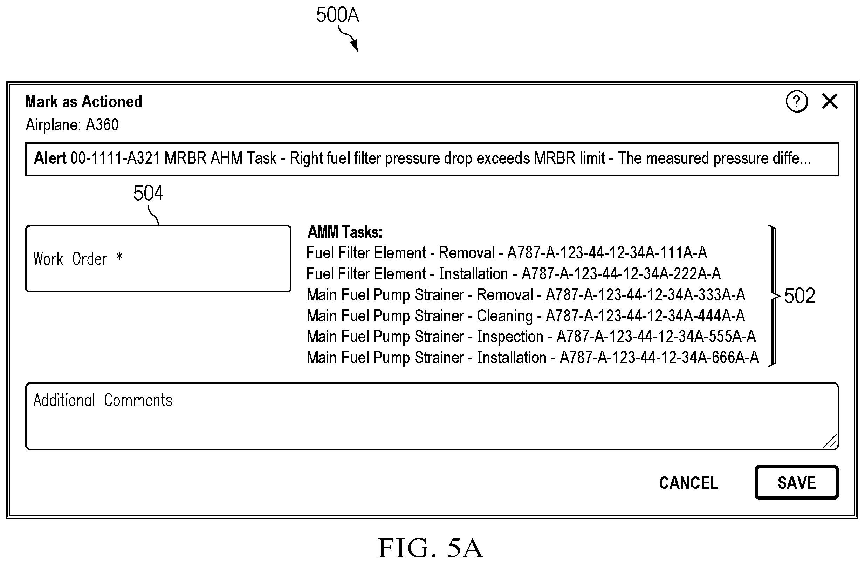

**Figure 5A - 5D** depicts examples of a status details pane that pops up in response to clicking on the workflow status to call up drop down menu **410.** Drop down menu **410** allows the user to select a specific version of the status display according to the phase of the workflow.

**Figure 5A** depicts a mark as actioned status display in accordance with an illustrative example. Mark as actioned status display **500A** can be used to begin work on a new threshold alert. It includes a listing of maintenance tasks **502** related to the aircraft system to resolve the threshold alert and a work order entry field **504.**

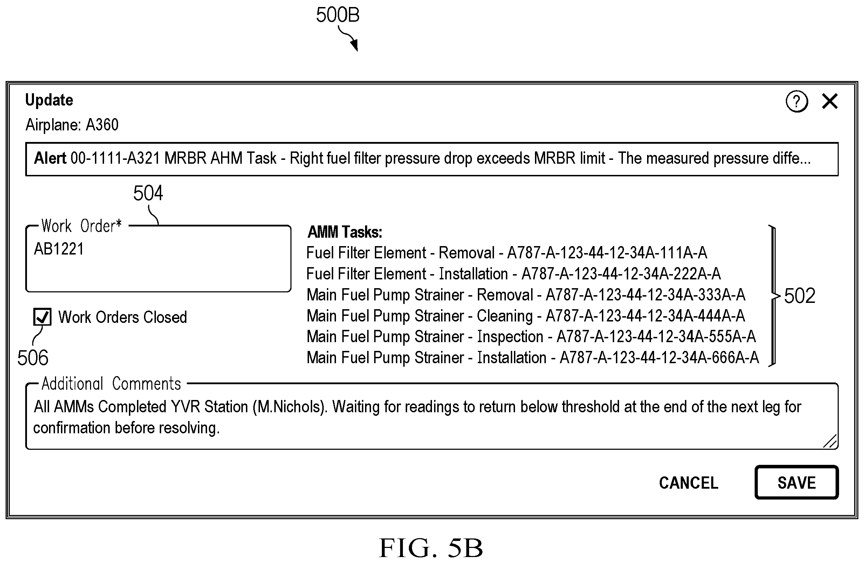

**Figure 5B** depicts an update status display in accordance with an illustrative example. After work has begun to address the threshold alert update status display **500B** adds an input field **506** to confirm that work orders are closed.

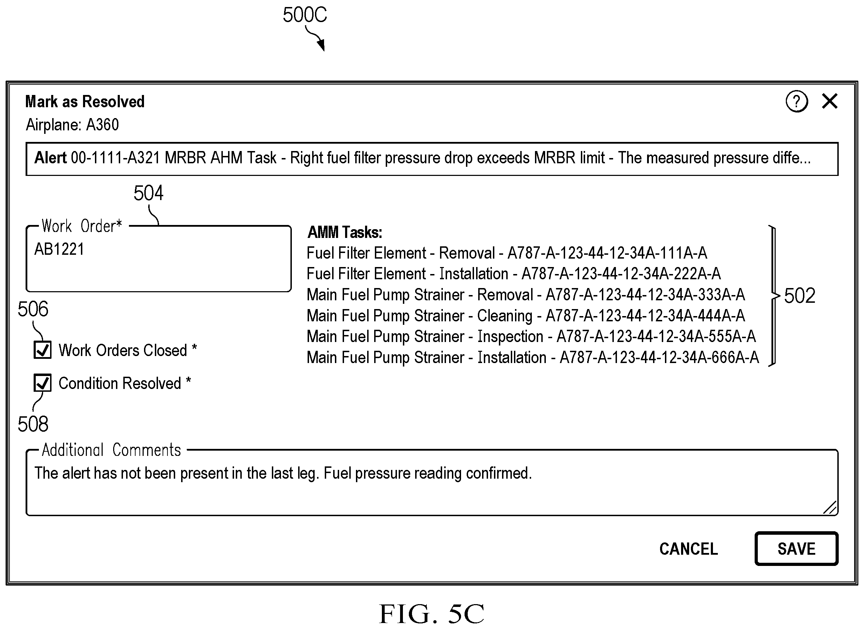

**Figure 5C** depicts a mark as resolved status display in accordance with an illustrative example. After work orders have been closed, the work must then be validated to ensure that the work did in fact resolve the issue. Mark as resolved status display **500C** adds an input field **508** to confirm that the condition underlying the threshold alert is resolved.

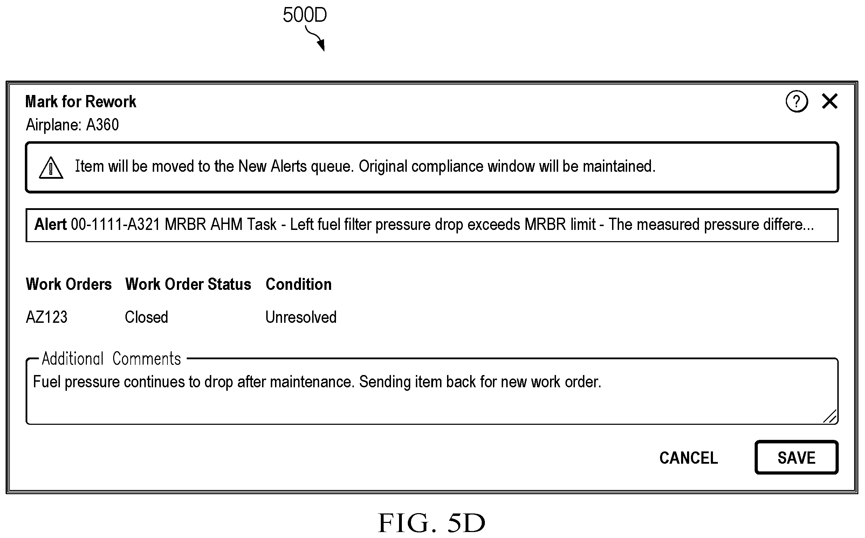

**Figure 5D** depicts a mark for rework status display in accordance with an illustrative example. If completion of the work orders does not properly resolve the issue, the user can select rework status display **500D** to initiate a new threshold alert to be placed back into the work queue. It should be noted that a rework alert does not reset the compliance window.

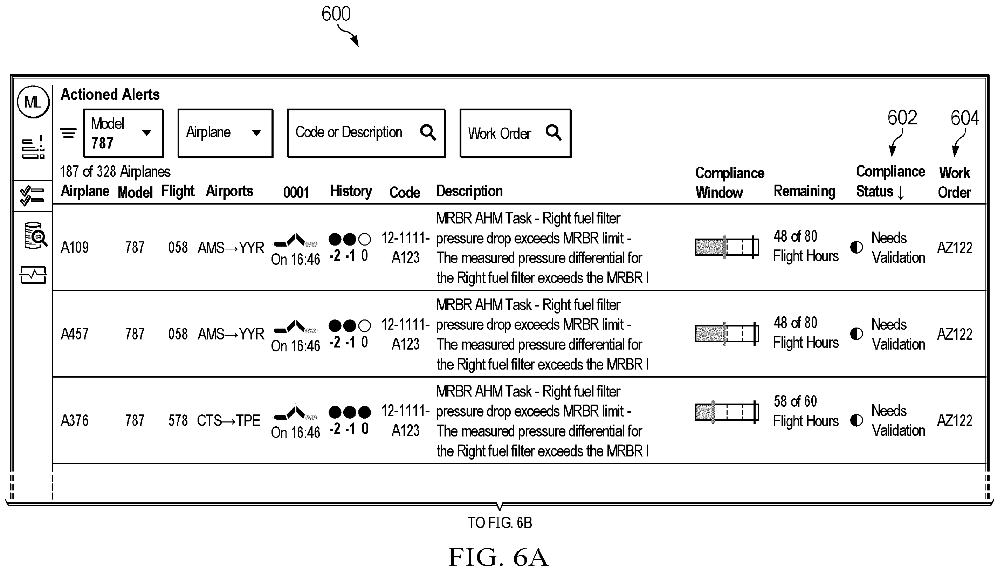

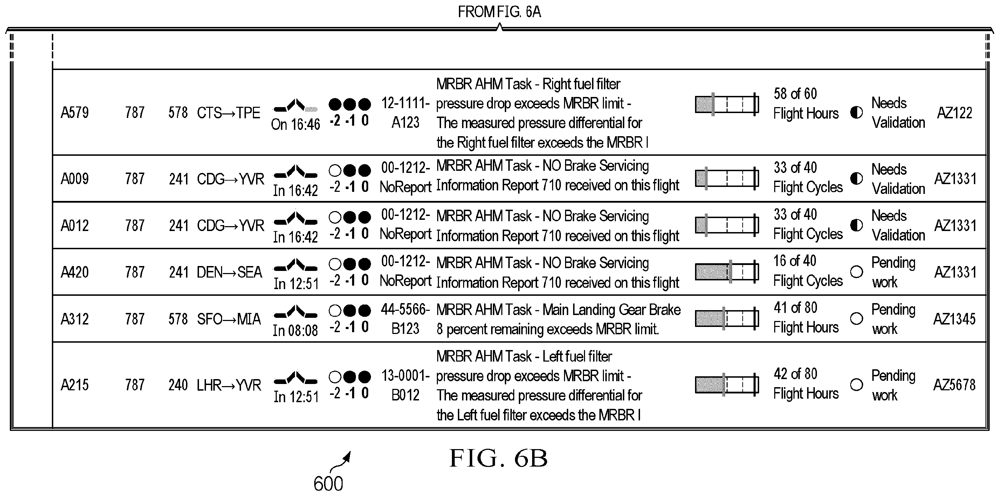

**Figures 6A** and **6B** depict an Actioned Alerts dashboard user interface for actioned alerts in accordance with an illustrative example. After new threshold alerts are marked as actioned (meaning work has been set in motion to address them), they are moved to interface **600.** Interface **600** contains similar data fields as those in interface **300** for new alerts but also includes compliance status field **602** and associated work order field **604.** Status details panes **500A-500D** can also be accessed and updated via compliance status field **602.**

In addition to generating an alert when an aircraft system exceeds an operational threshold, alerts are also generated when a report for an aircraft system was not sent by the aircraft for a specified number of flight cycles. For example, during a flight cycle, reports might be received for all aircraft systems except the report for Brake Servicing.

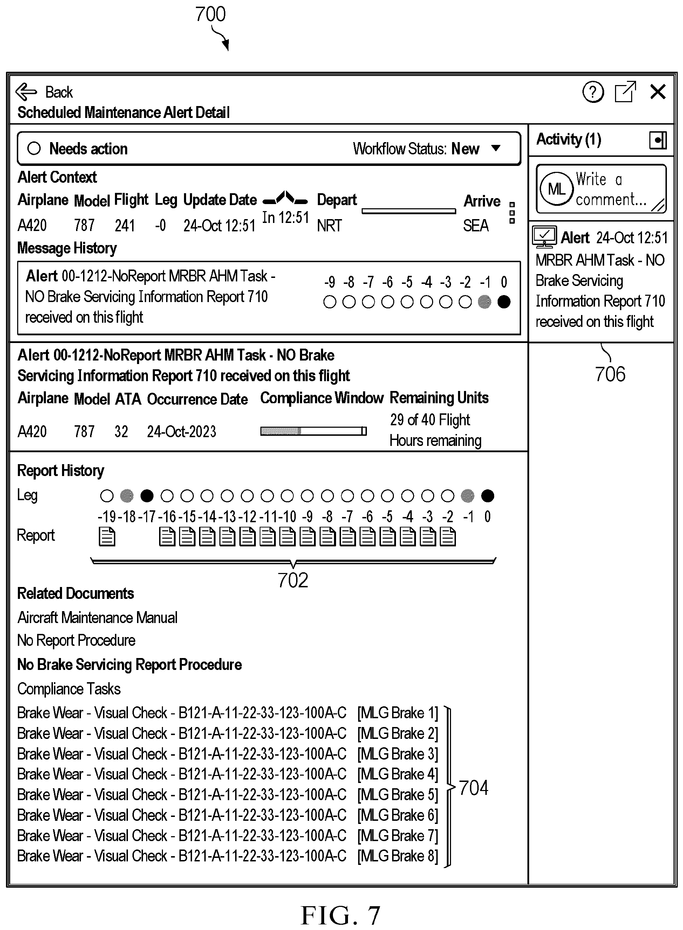

**Figure 7** depicts a "no report" details pane when a report for the associated aircraft system has not been received for a specified number of flight cycles in accordance with an illustrative example. Report outage details pane **700** is similar to alert details pane **400** but is specific to missing reports.

"No Report" details pane **700** slides into view as a second layer in response to clicking on the "no report" alert displayed in alert indicator **302.** The "No Report" details pane **700** contains links **702** for respective reports received for the flight cycles regarding the aircraft system in question for a specified number of flight cycles.

The "No Report" details pane **700** further contains links **704** to documents detailing required manual procedures and compliance tasks related to the aircraft system to address the outage for maintenance compliance.

Compliance status **708** provided details about the current status of the "no report" alert.

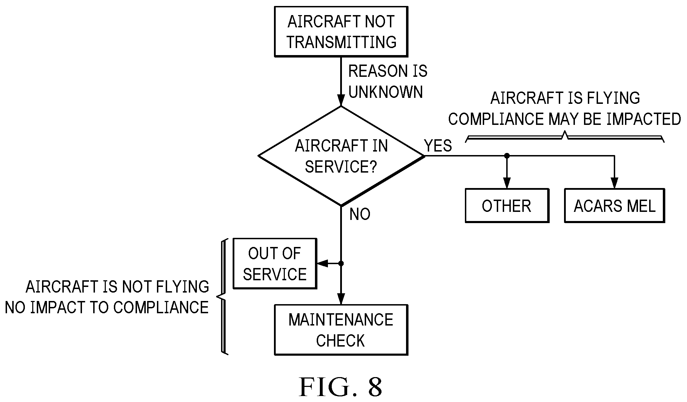

**Figure 8** depicts a flowchart illustrating the process for addressing complete transmission outages, wherein no data at all is received from an aircraft for a specified amount of time (in this example, assumed as 24 hours, but other time periods can be used). If the aircraft is not transmitting, the mitigation of this lack of transmission is dependent on whether or not the aircraft is flying at the time of the data outage.

If the aircraft is in service, the data outage may impact compliance. The aircraft may be in regular service, but ACARS system is on a MEL (Minimum Equipment List) deferral. Consequently, AHM received no data from the ACARS channel. In this situation, the operator must schedule manual maintenance tasks and verify the aircraft status in AHM every 24 hours. An ACARS MEL situation typically lasts one to three days in duration.

Alternatively, the aircraft may in regular service, but there is another reason that AHM is not receiving data from the aircraft. The operator must identify and investigate the data outage, schedule manual maintenance tasks to ensure compliance, and verify the aircraft status with AHM every 24 hours.

If the aircraft is not in service there is no impact on compliance. The aircraft might be Out of Service due to an unscheduled problem such as system malfunction (e.g., the air conditioning system does not work). If the aircraft of out of service, the operator must verify the status every 24 hours and ensure that when the aircraft returns to service, it is transmitting data properly. Such unscheduled out of service situations typically last 24-72 hours.

Alternatively, the aircraft might be undergoing an extended routine maintenance check. In this situation, the operator must verify the expected completion date at regular intervals and ensure that when the aircraft returns to service, it is transmitting data properly. An extended maintenance check has a typical duration of three to four months.

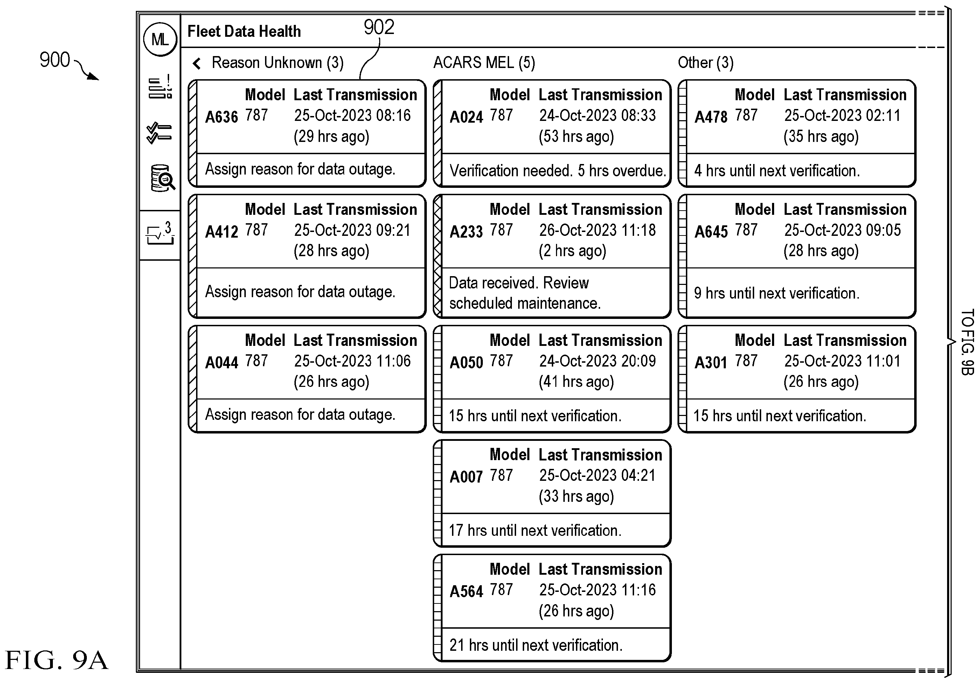

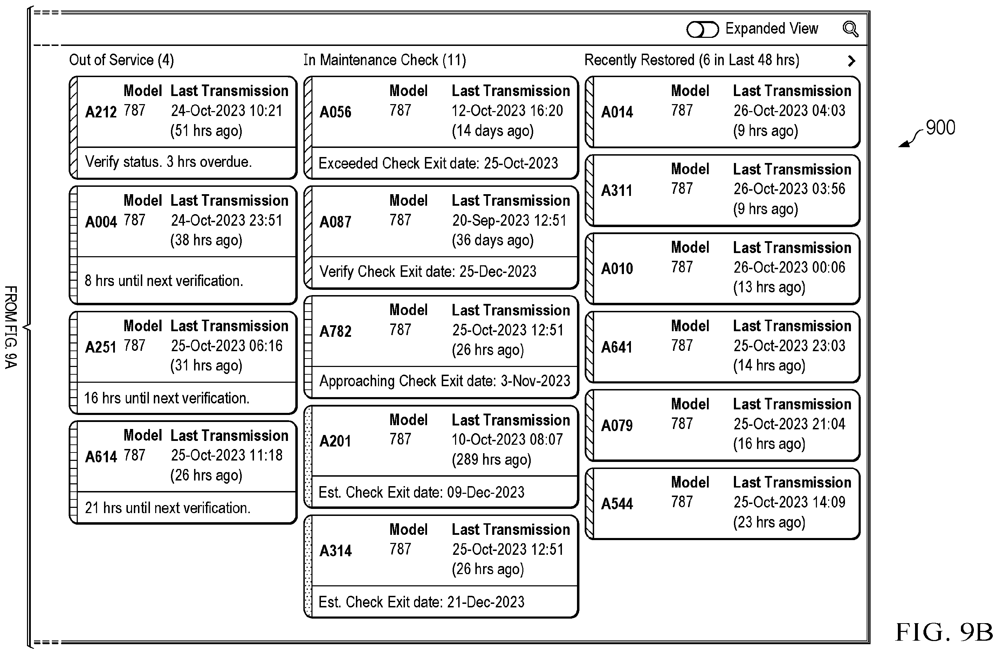

**Figures 9A** and **9B** depict a fleet data health display in accordance with an illustrative example. As shown in **Figures 9A** and **9B****,** fleet data health display **900** includes different categories of data transmission outage as described above. In line with the flowchart in **Figure 8****,** these categories include Reason Unknown, ACARS MEL, Other, Out of Service, and In Maintenance Check. Fleet data health display **900** may also include a category for Recently Restored aircraft that have resumed transmitting data.

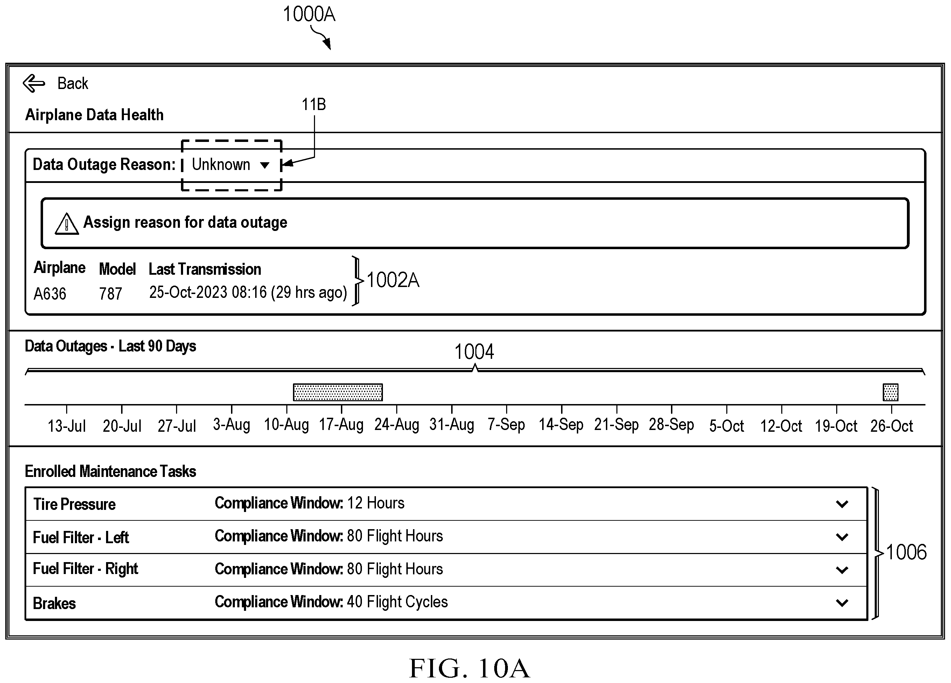

**Figure 10A** depicts an airplane data health details pane in accordance with an illustrative example. Clicking on an entry **902** under one of the categories in fleet data health display **900** causes airplane data health details pane **1000A** to slide into view as a second layer. Airplane data health details pane **1000A** includes a status summary **1002A** and contains a history **1004** of data outages for the aircraft.

Airplane data health details pane **1000A** further includes a listing of manual maintenance tasks **1006** that may be required as a result of the data outage.

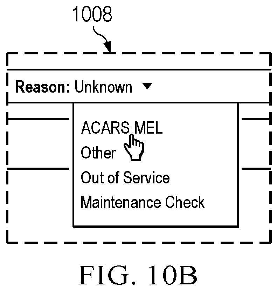

A Data Outage Reason drop down menu **1008,** shown in **Figure 10B****,** in airplane data health details pane **1000A** allows selecting and changing a category of data outage. A specialized details pane pops up in response to selection of a category for data outage from the drop down menu. The specialized details pane contains data entry fields that are specific to the selected category of data outage.

In the present example, the aircraft entry selected **902** fleet data health display **900** is currently listed as Unknown for the data outage reason.

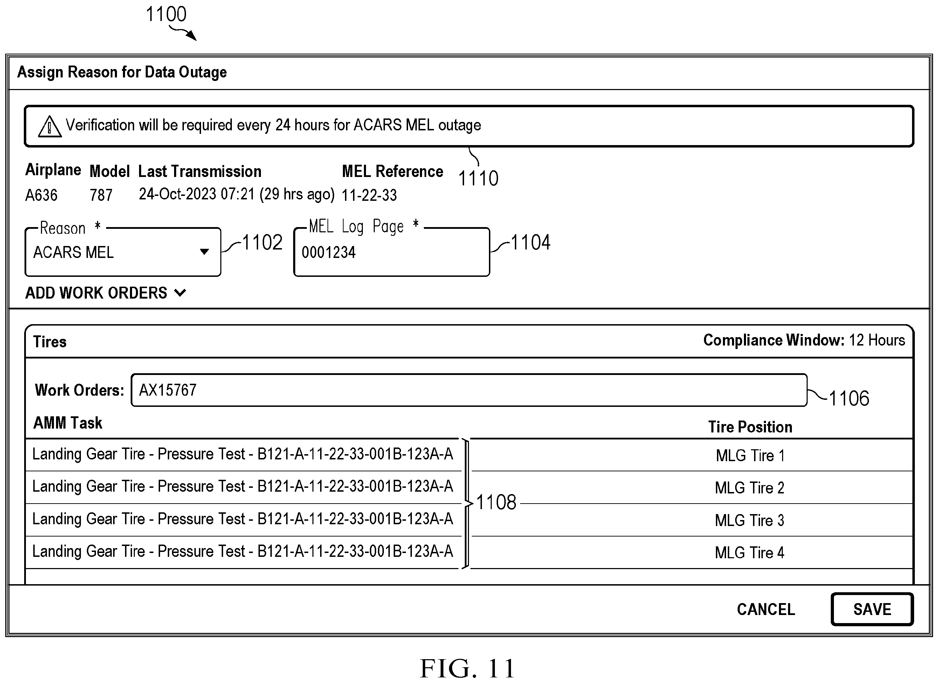

**Figure 11** depicts the specific details pane for an ACARS MEL category of data outage in accordance with an illustrative example. Details pane **1100** is conceptually similar to "No Report" details pane **700** but with expanded functionality and for situations in which no data for any of the aircraft systems is being received from the aircraft.

Details pane **1100** pops up in response to selection of ACARS MEL from drop down menu **1008.** Details pane **1100** includes a reason field **1102** which lists the selected reason for data outage and a MEL Log Page entry field **1104.** Details pane **1100** provides a work order entry field **1106** and lists manual maintenance tasks **1108** required as a result of the ACARS MEL data outage. Details pane **1100** also includes a status notification **1110** that indicates the frequency with which the status must be verified during the ACARS MEL data outage.

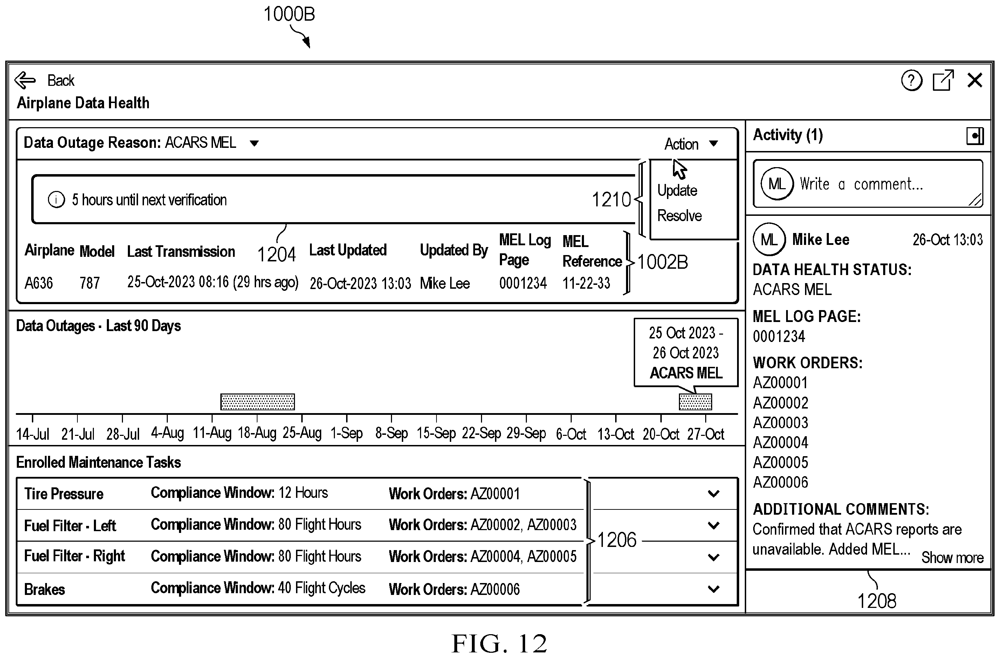

**Figure 12** depicts an airplane data health details pane after entry of ACARS MEL related data outage in accordance with an illustrative example. In response to selection of ACARS MEL as the reason for data outage and saving data entered in the required fields in details pane **1100,** the updated airplane data health details pane **1000B** includes an expanded status summary **1002B** that includes a MEL Log Page and MEL Reference as well as the identity of the person making the entry.

The selection of ACARS MEL will also move the respective entry for the aircraft from the Reason Unknown column in fleet data health display **900** to the ACARS MEL column.

Status notification **1204** provides information regarding time to next verification that is specific to an ACARS MEL situation. A list of procedures **1206** for required maintenance tasks are presented in expandable menus. Each enrolled system may require a different set of manual maintenance tasks.

Activity description **1208** indicates the current status of the workflow to address the data outage and the persons entering and updating information related to the workflow.

Drop down menu **1210** allows the user to call up details panes to update or resolve the status of the data outage.

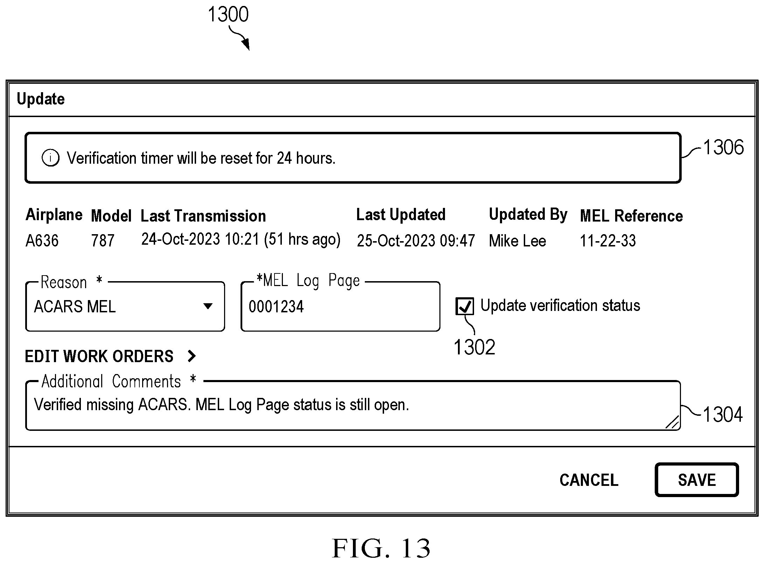

**Figure 13** depicts an update details pane for a pending categorized data outage in accordance with an illustrative example. Details pane **1300** is called up via drop down menu **1210** and is used to provide a verification update per the requirements listed in status notification **1204.**

Input field **1302** allows the user to verify the status of the ACARS MEL situation as continuing, which may be supplemented by comments in Additional Comments entry field **1304.** Verification resets the verification period, as noted in status notification **1306.**

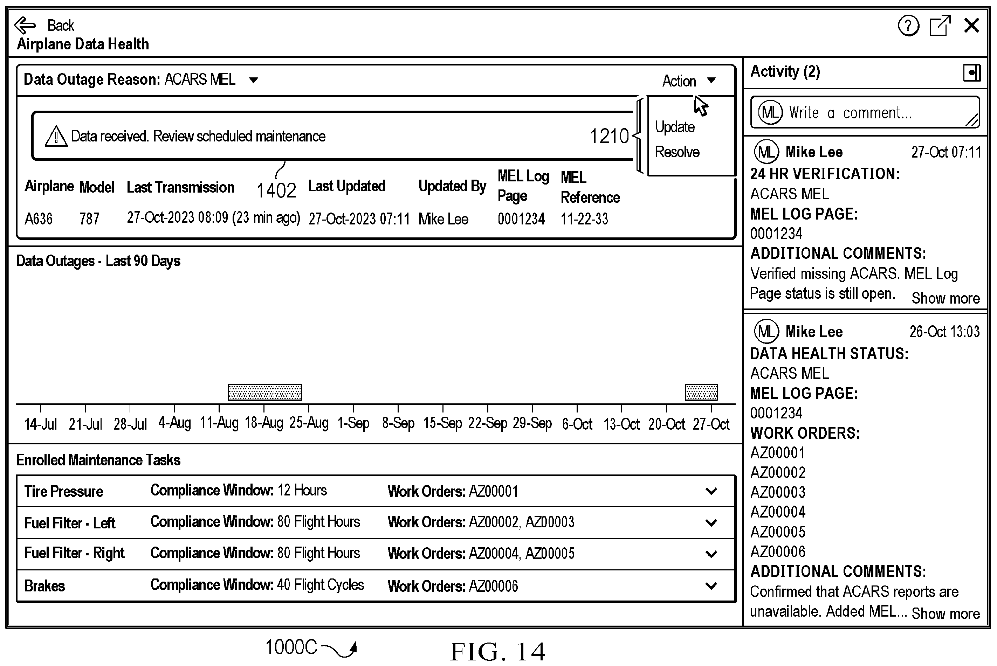

**Figure 14** depicts an airplane data health details pane upon resumption of data reception in accordance with an illustrative example. When the issues underlying the data outage are resolved, the aircraft will start transmitting data again, which is received by AHM.

This resumption of data transmission is indicated by status notification **1402** in airplane data health details pane **1000C.** The user now needs to ensure that any manual work orders scheduled during the data outage to maintain compliance have been canceled, since condition-based monitoring will resume for the aircraft.

Again, drop down menu **1210** allows the user to call up a details pane to resolve the status of the data outage.

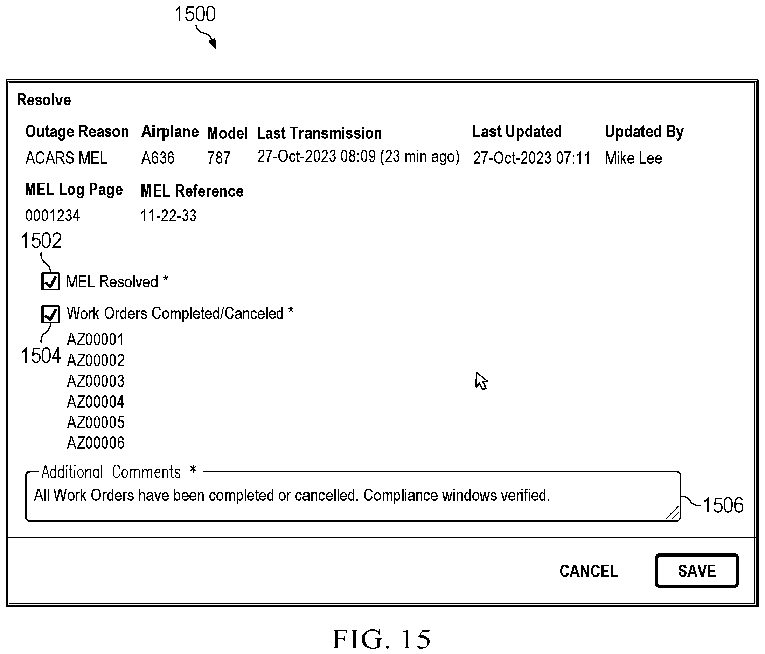

**Figure 15** depicts a resolution details pane for a pending categorized data outage in accordance with an illustrative example. Resolution details pane **1500** pops up responsive to selection of Resolve from drop down menu **1210.**

Input field **1502** allows the user to verify that the MEL deferral has been resolved. Input field **1504** allows the user to verify that all work orders associated with the MEL situation have been completed or canceled if no longer required. There verifications can be supplemented with comments in Additional Comments entry field **1506.**

Each type of data outage situation requires different details panes to account for differences in the respective timelines and workflows.

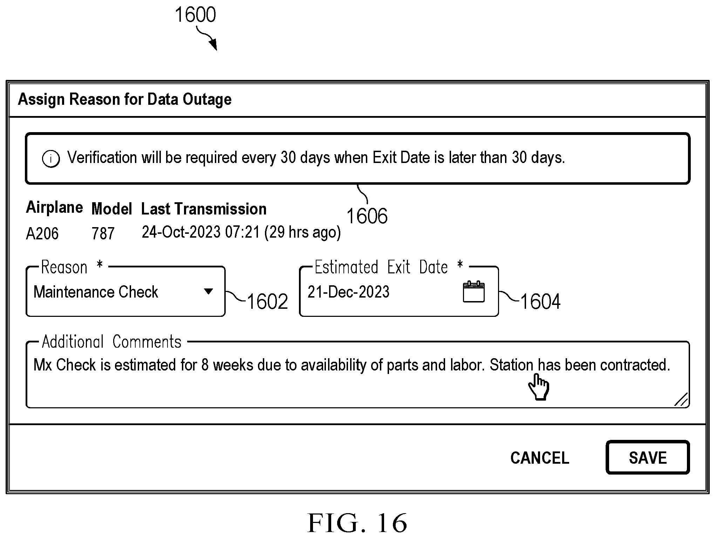

**Figure 16** depicts the specific details pane for a maintenance check category of data outage in accordance with an illustrative example. Referring back to **Figure 10****,** details pane **1600** is called up by selecting Maintenance Check in drop down menu **1008.**

Details pane **1600** includes a reason field **1602** which lists the selected reason for data outage and an estimated exit date entry field **1604** to specify the expected end of the maintenance check.

Details pane **1600** also includes a status notification **1606** that indicates the frequency with which the status must be verified during the maintenance check.

Unlike an ACARS MEL data outage, there are no work orders to specify in connection with the maintenance check because there is no threat to compliance in this situation. The maintenance work during a maintenance check is already predetermined and standardized.

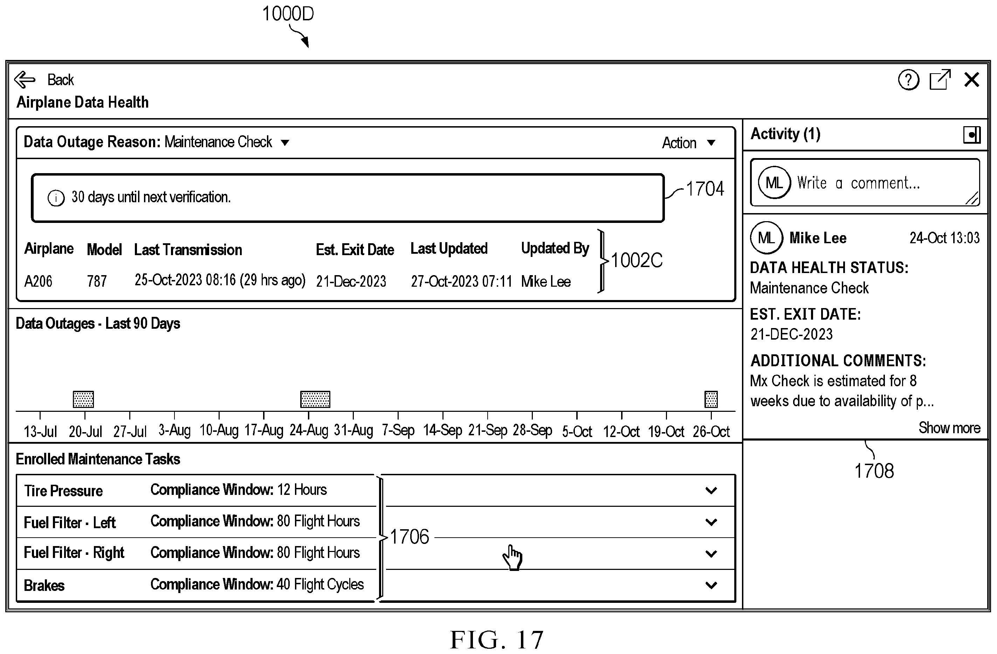

**Figure 17** depicts an airplane data health details pane after verification of maintenance check status information in accordance with an illustrative example. In response to selection of Maintenance Check as the reason for data outage and saving data entered in the required fields in details pane **1600,** the updated airplane data health details pane **1000D** includes an expanded status summary **1002C** that includes the identity of the person making the entry.

The selection of Maintenance Check also moves the respective entry for the aircraft from the Reason Unknown column in fleet data health display 900 to the In Maintenance Check column.

Status notification **1704** provides information regarding time to next verification that is specific to a maintenance check. A list of enrolled maintenance tasks **1706** are presented in expandable menus.

Activity description **1708** indicates the current status of the maintenance check and the persons entering and updating information related to the workflow.

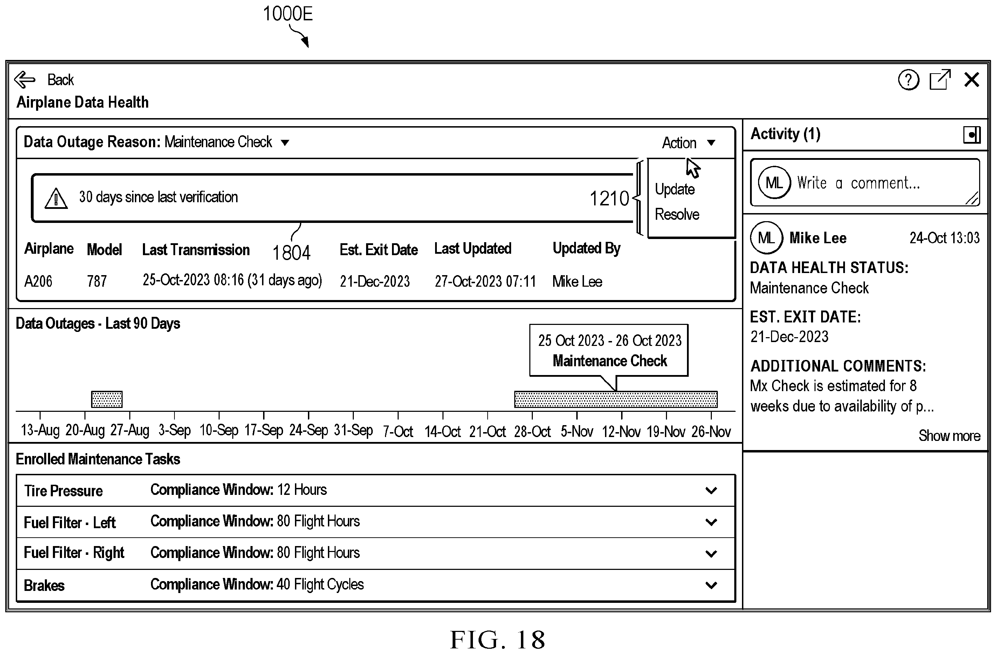

**Figure 18** depicts an airplane data health detail pain indicating an updated verification of maintenance check status in accordance with an illustrative example. If the maintenance check is not verified within the required 30 days, a notice is displayed in status notification **1804** of airplane data health details pane **1000E.** Again, drop down menu **1210** can be used to pull up a specialized details pane to provide an update or resolve the situation.

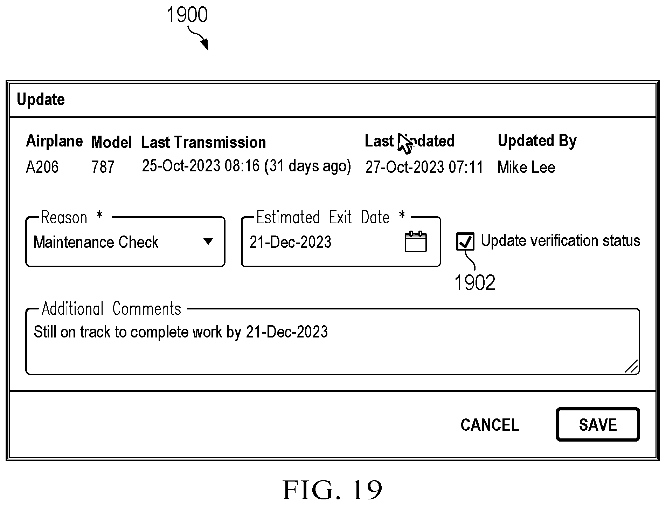

**Figure 19** depicts an update details pane for a pending maintenance check in accordance with an illustrative example. Update details pane **1900** is called up from drop down menu **1210** and is used to provide verification of an ongoing maintenance check. Update details pane **1900** is similar to details pane **1600** and provides an input field **1902** for updating the verification status to confirm that the maintenance check is still in progress.

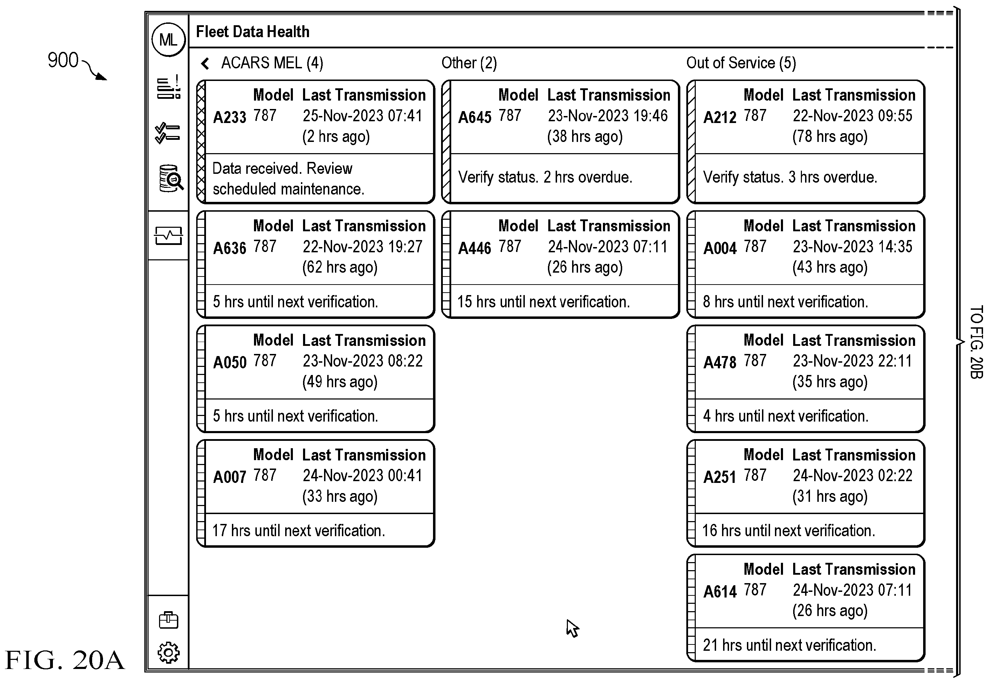

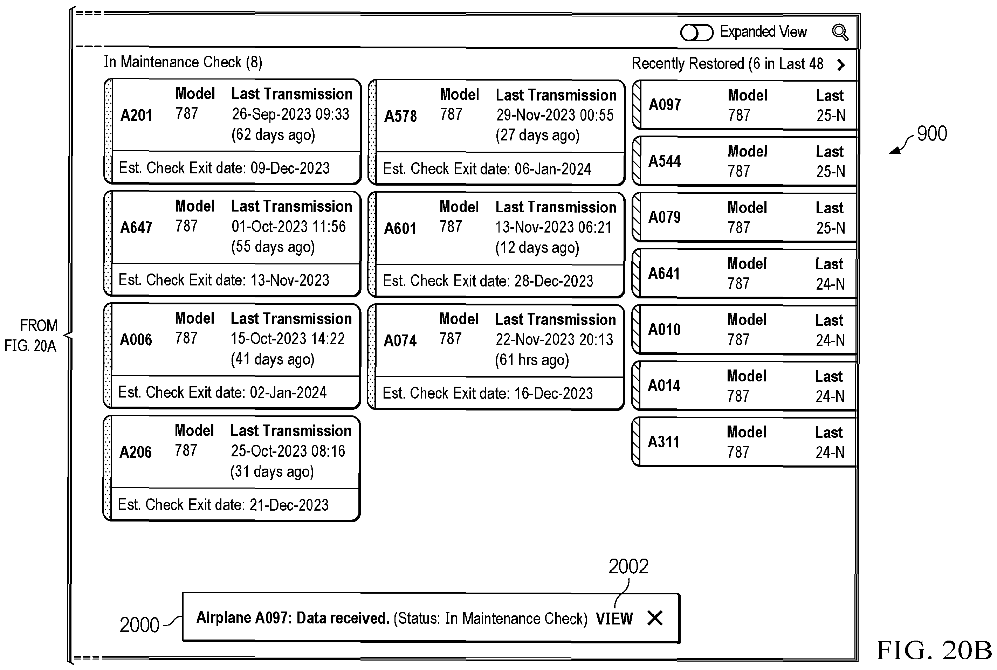

**Figures 20A** and **20B** depict automatic resolution notification in the fleet data health display in accordance with an illustrative example. When an aircraft comes out of an Out of Service or In Maintenance Check data outage and begins retransmitting data, an automatic resolution notification **2000** appears in fleet data health display **900,** and the aircraft entry is automatically moved to the Recently Restored column.

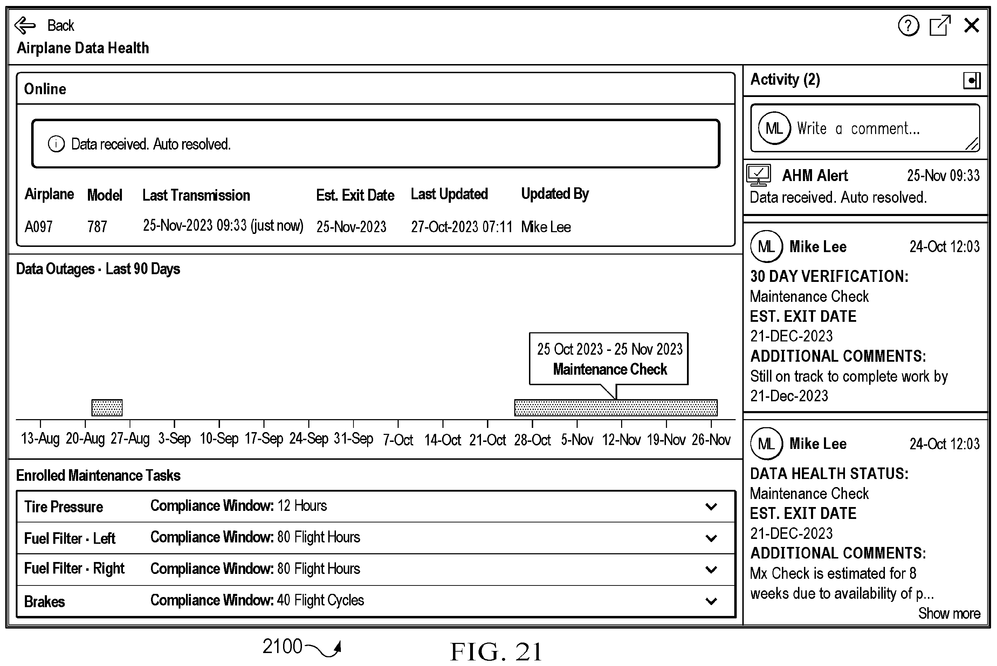

View button **2002** in automatic resolution notification **2000** can be used to call up a Revolved status details pane as shown in **Figure 21****.**

**Figure 21** depicts a Resolved status details pane providing details of an automatic resolution of a data outage in accordance with an illustrative example. Resolved status details pane **2100** provides details of an automatically resolved data outage.

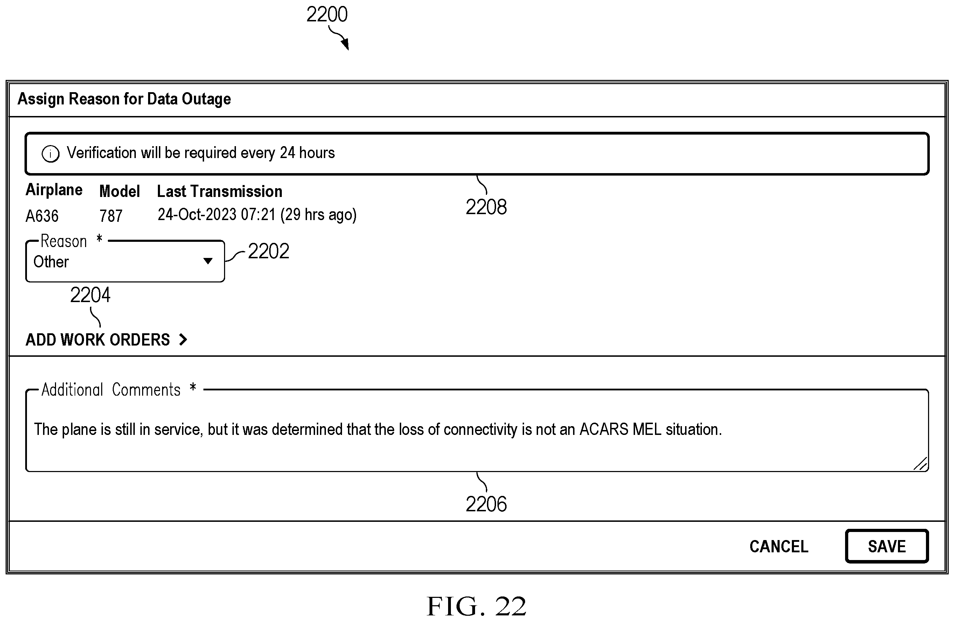

**Figure 22** depicts the specific details pane for an Other category of data outage in accordance with an illustrative example. Details pane **2200** pops up in response to selection of Other from drop down menu **1008.** Details pane **2200** includes a reason field **2202** which lists the selected reason for data outage. Details pane **2200** provides a work order entry menu **2204** and an additional comments entry field **2206** to provide an explanation as to why the data outage does not fall under one of the other categories. Details pane **2200** also includes a status notification **2208** that indicates the frequency with which the status must be verified during the data outage (e.g., every 24 hours).

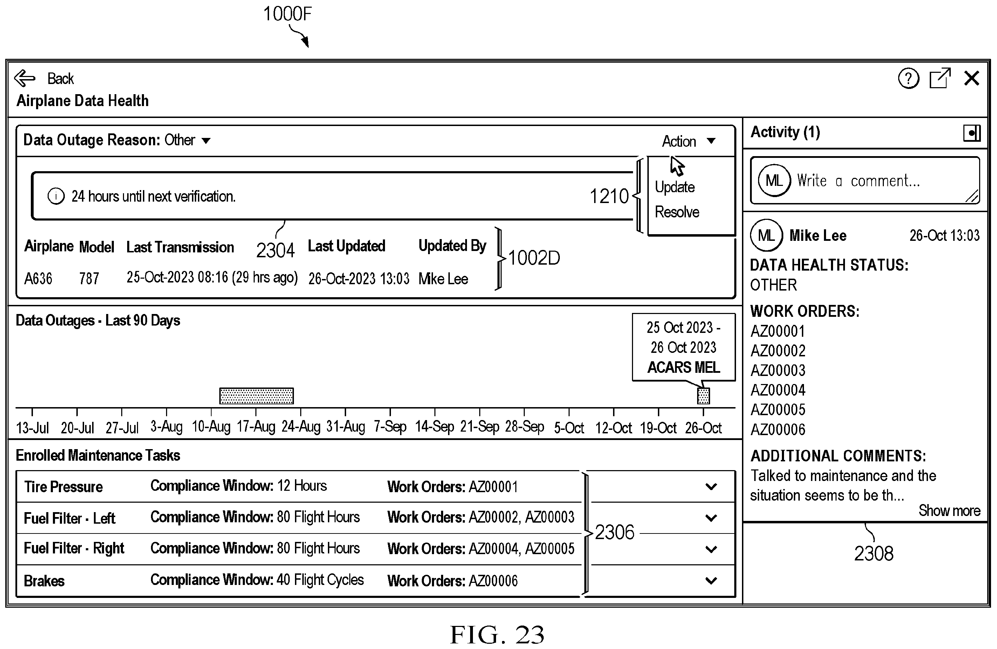

**Figure 23** depicts an airplane data health details pane after entry of Other related data outage in accordance with an illustrative example. In response to selection of Other as the reason for data outage and saving data entered in the required fields in details pane **2200,** the updated airplane data health details pane **1000F** includes an expanded status summary **1002D** that includes the identity of the person making the entry.

The selection of Other will also move the respective entry for the aircraft from the Reason Unknown column in fleet data health display **900** to the Other column.

Status notification **2304** provides information regarding time to next verification that is specific to an Other situation. A list of work orders **2306** for required maintenance tasks are presented in expandable menus. Each work order may require a different set of maintenance tasks.

Activity description **2308** indicates the current status of the workflow to address the transmission outage and the persons entering and updating information related to the workflow.

Drop down menu **1210** again allows the user to call up details panes to update or resolve the status of the data outage.

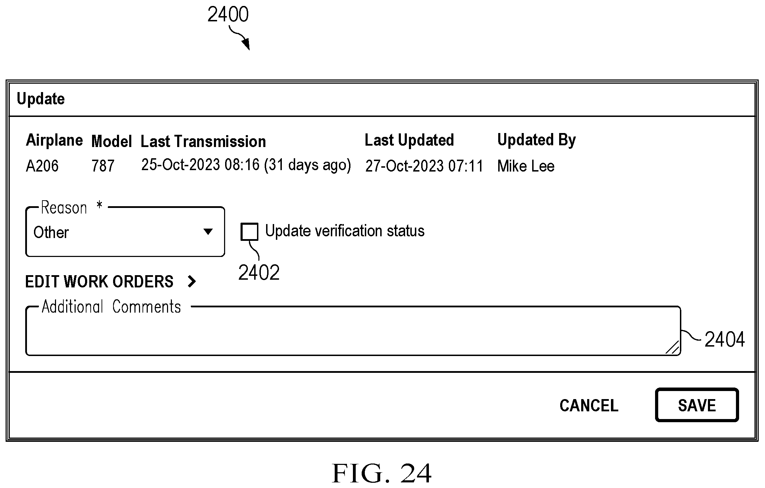

**Figure 24** depicts an update details pane for an Other categorized data outage in accordance with an illustrative example. Details pane **2400** is called up via drop down menu **1210** in airplane data health details pane **1000F** and is used to provide a verification update per the requirements listed in status notification **2304.**

Input field **2402** allows the user to verify the status of the Other data outage situation as continuing, which may be supplemented by comments in Additional Comments entry field **2404.**

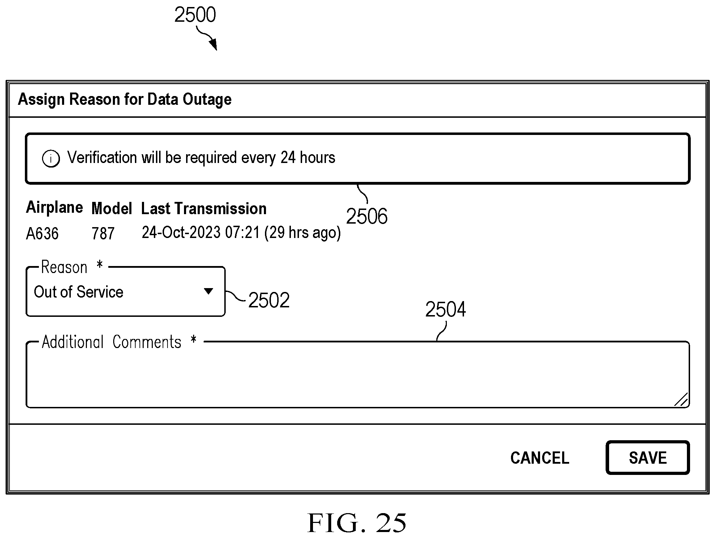

**Figure 25** depicts the specific details pane for an Other category of data outage in accordance with an illustrative example. Details pane **2500** pops up in response to selection of Other from drop down menu **1008.** Details pane **2500** includes a reason field **2502** which lists the selected reason for data outage. Details pane **2200** provides an additional comments entry field **2504.** Details pane **2500** also includes a status notification **2506** that indicates the frequency with which the status must be verified during the data outage (e.g., every 24 hours).

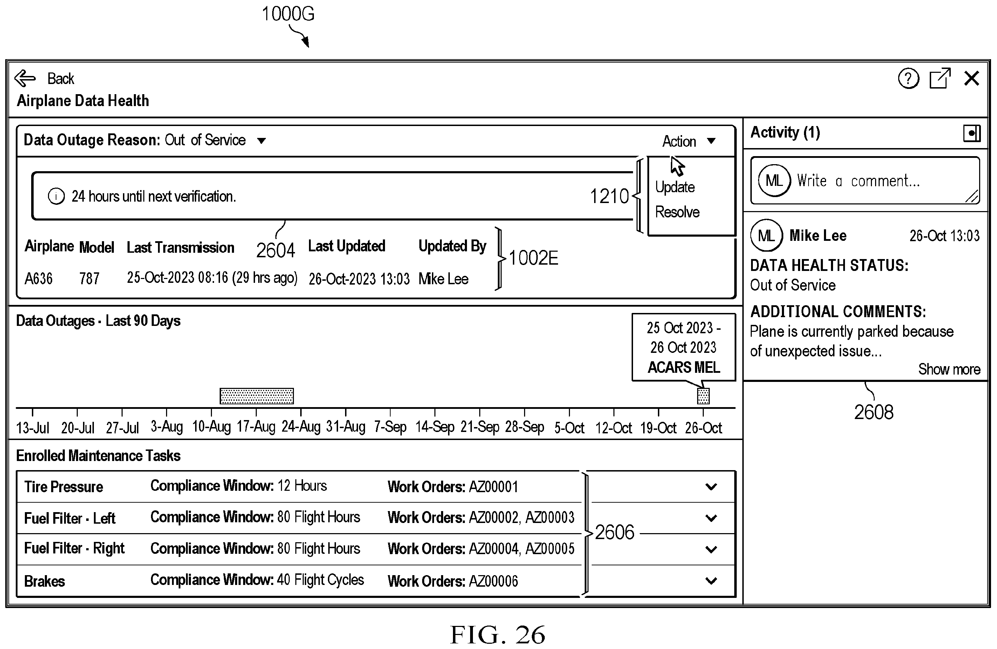

**Figure 26** depicts an airplane data health details pane after entry of Out of Service related data outage in accordance with an illustrative example. In response to selection of Out of Service as the reason for data outage and saving data entered in the required fields in details pane **2500,** the updated airplane data health details pane **1000G** includes an expanded status summary **1002E** that includes the identity of the person making the entry.

The selection of Out of Service will also move the respective entry for the aircraft from the Reason Unknown column in fleet data health display **900** to the Out of Service column.

Status notification **2604** provides information regarding time to next verification that is specific to an Out of Service situation. A list of procedures **2606** for required manual maintenance tasks are presented in expandable menus. Each procedure may require a different set of maintenance tasks.

Activity description **2608** indicates the current status of the workflow to address the transmission outage and the persons entering and updating information related to the workflow.

Again, drop down menu **1210** allows the user to call up details panes to update or resolve the status of the data outage.

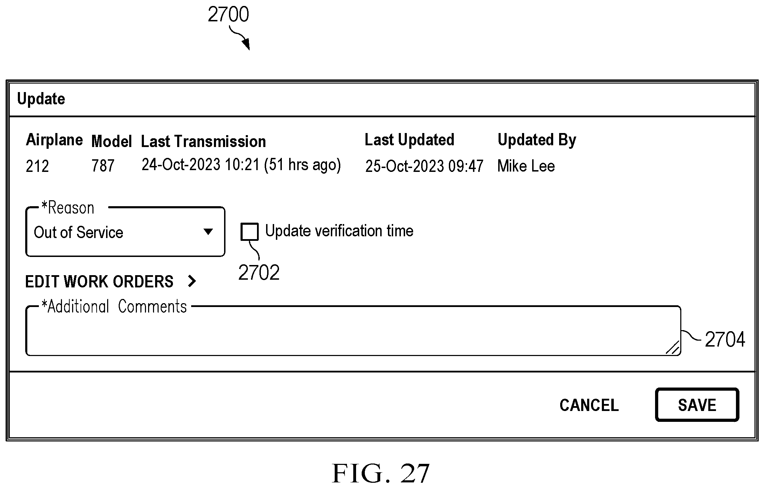

**Figure 27** depicts an update details pane for an Out of Service categorized data outage in accordance with an illustrative example. Details pane **2700** is called up via drop down menu **1210** in airplane data health details pane **1000G** and is used to provide a verification update per the requirements listed in status notification **2604.**

Input field **2702** allows the user to update the verification time for the aircraft being Out of Service, which may be supplemented by comments in Additional Comments entry field **2704.**

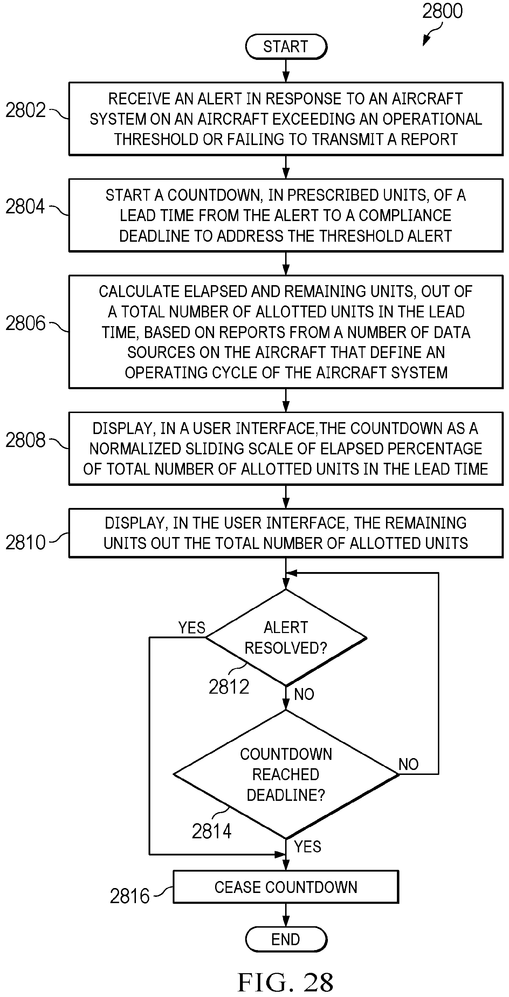

**Figure 28** depicts a flowchart illustrating a process for tracking a maintenance compliance window of opportunity in accordance with an illustrative example. Process **2800** can be implemented in AHM system **100 in** **Figure 1****.**

Process **2800** begins by receiving an alert in response to an aircraft system on an aircraft exceeding an operational threshold or failing to transmit a report (operation **2802**). The aircraft system might comprise one of brakes, tires, or engine fuel filters. For example, the alert might be triggered by brake wear above a specified threshold, a tired pressure below a specified threshold, or fuel filter pressure below a specified threshold. The threshold alert may also be triggered when a report for the aircraft system has not been received for a specified number of flight cycles.

Process **2800** starts a countdown, denoted in prescribed units, of a lead time from the alert to a compliance deadline to address the threshold alert (operation **2804**). The prescribed units might comprise elapsed hours, flight hours, or flight cycles.

Process **2800** calculates elapsed and remaining units, out of a total number of allotted units in the lead time, based on reports from a number of data sources on the aircraft that define an operating cycle of the aircraft system (operation **2806**). The data sources that define the operating cycle of the aircraft system detect and report different flight phases of the aircraft.

The countdown is displayed in a user interface as a normalized sliding scale of elapsed percentage of total number of allotted units in the lead time (operation **2808**). Concurrently, the remaining units out the total number of allotted units are also displays in the user interface (operation **2810**).

Process **2800** monitors for resolution of the threshold alert (operation **2812**). Resolution of the alert might comprise receiving validation from a user that a condition underlying the alert is resolved. In the case of a "no report" alert, resolution of the alert might comprise resumed transmission of reports by the aircraft.

Upon receipt of the validation, the countdown ceases (operation **2816**).

If validation is not received, process **2800** determines whether the countdown has reached the compliance deadline (operation **2814**). If the lead time has not completely elapsed, process **2800** continues the countdown and continues to monitor for a validation of resolution. If the countdown has reached the compliance deadline and the lead time has completely elapsed, process **2800** ceases the countdown, at which point the aircraft is out of compliance and must be grounded until the issue underlying the threshold alert is resolved.

Process **2800** then ends.

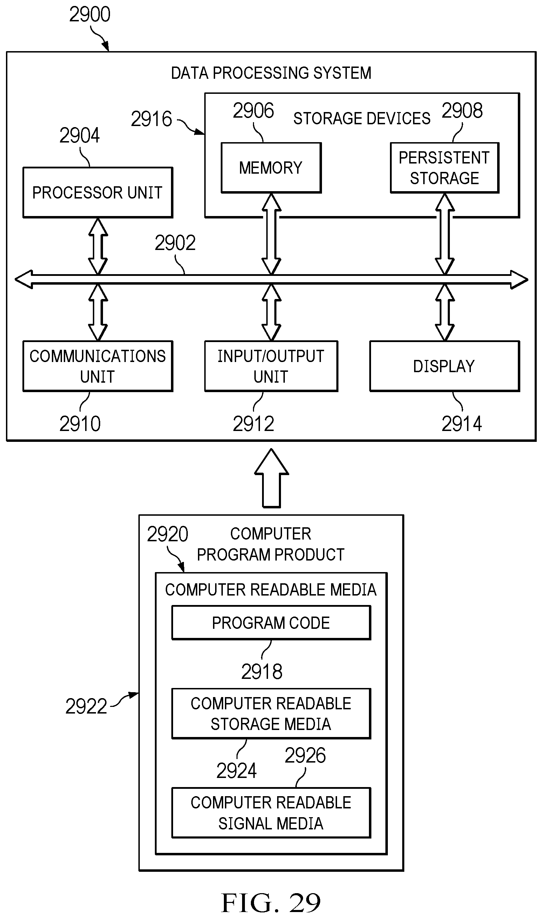

Turning now to **Figure 29****,** an illustration of a block diagram of a data processing system is depicted in accordance with an illustrative example. Data processing system **2900** may be used to implement computer system **150** in **Figure 1****.** In this illustrative example, data processing system **2900** includes communications framework **2902,** which provides communications between processor unit **2904,** memory **2906,** persistent storage **2908,** communications unit **2910,** input/output (I/O) unit **2912,** and display **2914.** In this example, communications framework **2902** takes the form of a bus system.

Processor unit **2904** serves to execute instructions for software that may be loaded into memory **2906.** Processor unit **2904** may be a number of processors, a multi-processor core, or some other type of processor, depending on the particular implementation. In an example, processor unit **2904** comprises one or more conventional general-purpose central processing units (CPUs). In an alternate example, processor unit **2904** comprises one or more graphical processing units (GPUs).

Memory **2906** and persistent storage **2908** are examples of storage devices **2916.** A storage device is any piece of hardware that is capable of storing information, such as, for example, without limitation, at least one of data, program code in functional form, or other suitable information either on a temporary basis, a permanent basis, or both on a temporary basis and a permanent basis. Storage devices **2916** may also be referred to as computer-readable storage devices in these illustrative examples. Memory **2906,** in these examples, may be, for example, a random access memory or any other suitable volatile or non-volatile storage device. Persistent storage **2908** may take various forms, depending on the particular implementation.

For example, persistent storage **2908** may contain one or more components or devices. For example, persistent storage **2908** may be a hard drive, a flash memory, a rewritable optical disk, a rewritable magnetic tape, or some combination of the above. The media used by persistent storage **2908** also may be removable. For example, a removable hard drive may be used for persistent storage **2908.** Communications unit **2910,** in these illustrative examples, provides for communications with other data processing systems or devices. In these illustrative examples, communications unit **2910** is a network interface card.

Input/output unit **2912** allows for input and output of data with other devices that may be connected to data processing system **2900.** For example, input/output unit **2912** may provide a connection for user input through at least one of a keyboard, a mouse, or some other suitable input device. Further, input/output unit **2912** may send output to a printer. Display **2914** provides a mechanism to display information to a user.

Instructions for at least one of the operating system, applications, or programs may be located in storage devices **2916,** which are in communication with processor unit **2904** through communications framework **2902.** The processes of the different examples may be performed by processor unit **2904** using computer-implemented instructions, which may be located in a memory, such as memory **2906.**

These instructions are referred to as program code, computer-usable program code, or computer-readable program code that may be read and executed by a processor in processor unit **2904.** The program code in the different examples may be embodied on different physical or computer-readable storage media, such as memory **2906** or persistent storage **2908.**

Program code **2918** is located in a functional form on computer-readable media **2920** that is selectively removable and may be loaded onto or transferred to data processing system **2900** for execution by processor unit **2904.** Program code **2918** and computer-readable media **2920** form computer program product **2922** in these illustrative examples. In one example, computer-readable media **2920** may be computer-readable storage media **2924** or computer-readable signal media **2926.**

In these illustrative examples, computer-readable storage media **2924** is a physical or tangible storage device used to store program code **2918** rather than a medium that propagates or transmits program code **2918.** Computer readable storage media **2924,** as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire, as used herein, is not to be construed as being transitory signals *per se,* such as radio waves or other freely propagating electromagnetic waves, electromagnetic waves propagating through a waveguide or other transmission media (e.g., light pulses passing through a fiber-optic cable), or electrical signals transmitted through a wire.

Alternatively, program code **2918** may be transferred to data processing system **2900** using computer-readable signal media **2926.** Computer-readable signal media **2926** may be, for example, a propagated data signal containing program code **2918.** For example, computer-readable signal media **2926** may be at least one of an electromagnetic signal, an optical signal, or any other suitable type of signal. These signals may be transmitted over at least one of communications links, such as wireless communications links, optical fiber cable, coaxial cable, a wire, or any other suitable type of communications link.

The different components illustrated for data processing system **2900** are not meant to provide architectural limitations to the manner in which different examples may be implemented. The different illustrative examples may be implemented in a data processing system including components in addition to or in place of those illustrated for data processing system **2900.** Other components shown in **Figure 29** can be varied from the illustrative examples shown. The different examples may be implemented using any hardware device or system capable of running program code **2918.**

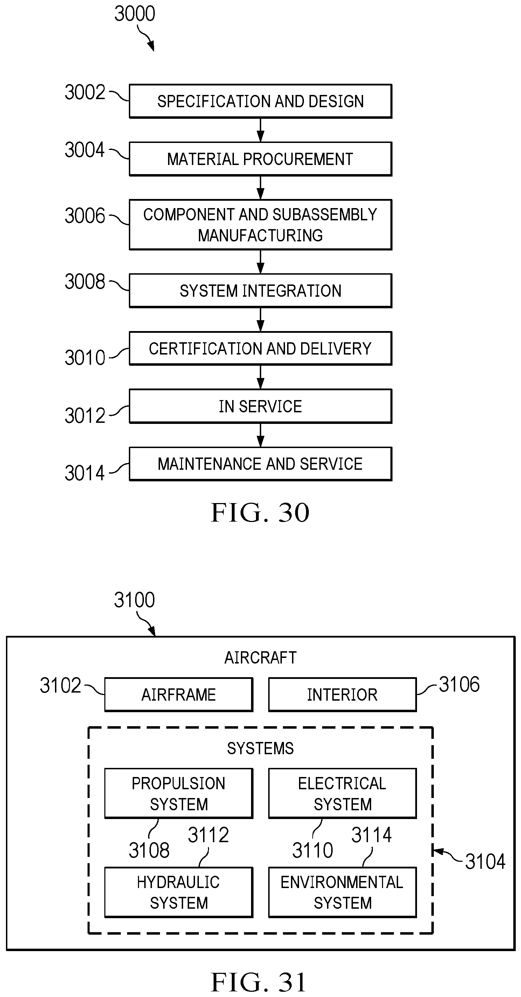

Illustrative examples of the disclosure may be described in the context of aircraft manufacturing and service method **3000** as shown in **Figure 30** and aircraft **3100** as shown in **Figure 31****.** Turning first to **Figure 30****,** an illustration of an aircraft manufacturing and service method is depicted in accordance with an illustrative example. During pre-production, aircraft manufacturing and service method **3000** may include specification and design **3002** of aircraft **3100** in **Figure 31** and material procurement **3004.**

During production, component and subassembly manufacturing **3006** and system integration **3008** of aircraft **3100** in **Figure 31** takes place. Thereafter, aircraft **3100** in **Figure 31** can go through certification and delivery **3010** in order to be placed in service **3012.** While in service **3012** by a customer, aircraft **3100** in **Figure 31** is scheduled for routine maintenance and service **3014,** which may include modification, reconfiguration, refurbishment, and other maintenance or service.

Each of the processes of aircraft manufacturing and service method **3000** may be performed or carried out by a system integrator, a third party, an operator, or some combination thereof. In these examples, the operator may be a customer. For the purposes of this description, a system integrator may include, without limitation, any number of aircraft manufacturers and major-system subcontractors; a third party may include, without limitation, any number of vendors, subcontractors, and suppliers; and an operator may be an airline, a leasing company, a military entity, a service organization, and so on.

With reference now to **Figure 31****,** an illustration of an aircraft is depicted in which an illustrative example may be implemented. In this example, aircraft **3100** is produced by aircraft manufacturing and service method **3000** in **Figure 30** and may include airframe **3102** with plurality of systems **3104** and interior **3106.** Examples of systems **3104** include one or more of propulsion system **3108,** electrical system **3110,** hydraulic system **3112,** and environmental system **3114.** Any number of other systems may be included. Although an aerospace example is shown, different illustrative examples may be applied to other industries, such as the automotive industry.

Apparatuses and methods embodied herein may be employed during at least one of the stages of aircraft manufacturing and service method **3000** in **Figure 30****.** In one illustrative example, components or subassemblies produced in component and subassembly manufacturing **3006** in **Figure 30** can be fabricated or manufactured in a manner similar to components or subassemblies produced while aircraft **3100** is in service **3012** in **Figure 30****.** As yet another example, one or more apparatus examples, method examples, or a combination thereof can be utilized during production stages, such as component and subassembly manufacturing **3006** and system integration **3008** in **Figure 30****.** One or more apparatus examples, method examples, or a combination thereof may be utilized while aircraft **3100** is in service **3012,** during maintenance and service **3014** in **Figure 30****,** or both. The use of a number of the different illustrative examples may substantially expedite the assembly of aircraft **3100,** reduce the cost of aircraft **3100,** or both expedite the assembly of aircraft **3100** and reduce the cost of aircraft **3100.**

As used herein, the phrase "at least one of," when used with a list of items, means different combinations of one or more of the listed items can be used, and only one of each item in the list may be needed. In other words, "at least one of" means any combination of items and number of items may be used from the list, but not all of the items in the list are required. The item can be a particular object, a thing, or a category.

For example, without limitation, "at least one of item A, item B, or item C" may include item A, item A and item B, or item B. This example also may include item A, item B, and item C or item B and item C. Of course, any combinations of these items can be present. In some illustrative examples, "at least one of" can be, for example, without limitation, two of item A; one of item B; and ten of item C; four of item B and seven of item C; or other suitable combinations.

As used herein, "a number of" when used with reference to items, means one or more items. For example, "a number of different types of networks" is one or more different types of networks. In illustrative example, a "set of" as used with reference items means one or more items. For example, a set of metrics is one or more of the metrics.

The description of the different illustrative examples has been presented for purposes of illustration and description and is not intended to be exhaustive or limited to the examples in the form disclosed. The different illustrative examples describe components that perform actions or operations. In an illustrative example, a component can be configured to perform the action or operation described. For example, the component can have a configuration or design for a structure that provides the component an ability to perform the action or operation that is described in the illustrative examples as being performed by the component. Further, to the extent that terms "includes", "including", "has", "contains", and variants thereof are used herein, such terms are intended to be inclusive in a manner similar to the term "comprises" as an open transition word without precluding any additional or other elements.

Further examples are set out in the clauses below:
1. A computer-implemented method of tracking a maintenance compliance window of opportunity, the method comprising: receiving an alert in response to an aircraft system on an aircraft exceeding an operational threshold or failing to transmit a report;
   starting a countdown, in prescribed units, of a lead time from the alert to a compliance deadline to address the alert; calculating elapsed and remaining units, out of a total number of allotted units in the lead time, based on reports from a number of data sources on the aircraft that define an operating cycle of the aircraft system; displaying, in a user interface, the countdown as a normalized sliding scale of elapsed percentage of total number of allotted units in the lead time;
   displaying, in the user interface, the remaining units out the total number of allotted units; and
   ceasing the countdown in response to the first of:
      resolution of the alert; or
      the countdown reaching the compliance deadline, wherein
      the lead time has completely elapsed.
2. The method of clause 1, wherein the units of the lead time comprise: elapsed hours; flight hours; or flight cycles.
3. The method of clause 1 or 2, wherein the aircraft system comprises one of: brakes; tires; or engine fuel filters.
4. The method of any one of the preceding clauses, wherein the data sources that define the operating cycle of the aircraft system detect and report different flight phases of the aircraft.
5. The method of any one of the preceding clauses, wherein the alert is triggered when a report for the aircraft system has not been received for a specified number of flight cycles.
6. The method of any one of the preceding clauses, wherein resolution of the alert comprises receiving validation from a user that a condition underlying the alert is resolved.
7. The method of any one of the preceding clauses, wherein resolution of the alert comprises resumed transmission of reports by the aircraft.
8. A system for tracking a maintenance compliance window of opportunity, the system comprising:
   a storage device that stores program instructions;
   one or more processors operably connected to the storage device and configured to execute the program instructions to cause the system to:
      receive an alert in response to an aircraft system on an aircraft exceeding an operational threshold or failing to transmit a report;
      start a countdown, in prescribed units, of a lead time from the alert to a compliance deadline to address the alert;
      calculate elapsed and remaining units, out of a total number of allotted units in the lead time, based on reports from a number of data sources on the aircraft that define an operating cycle of the aircraft system;
      display, in a user interface, the countdown as a normalized sliding scale of elapsed percentage of total number of allotted units in the lead time;
      display, in the user interface, the remaining units out the total number of allotted units; and
      cease the countdown in response to the first of:
         resolution of the alert; or
         the countdown reaching the compliance deadline, wherein
         the lead time has completely elapsed.
9. The system of clause 8, wherein the units of the lead time comprise: elapsed hours; flight hours; or flight cycles.
10. The system of clause 8 or 9, wherein the aircraft system comprises one of: brakes; tires; or engine fuel filters.
11. The system of any one of clauses 8-10, wherein the data sources that define the operating cycle of the aircraft system detect and report different flight phases of the aircraft.
12. The system of any one of clauses 8-11, wherein the alert is triggered when a report for the aircraft system has not been received for a specified number of flight cycles.
13. The system of any one of clauses 8-12, wherein resolution of the alert comprises receiving validation from a user that a condition underlying the alert is resolved.
14. The system of any one of clauses 8-13, wherein resolution of the alert comprises resumed transmission of reports by the aircraft.
15. A computer program product for tracking a maintenance compliance window of opportunity, the computer program product comprising:
   a computer-readable storage medium having program instructions embodied thereon to perform the operations of:
      receiving an alert in response to an aircraft system on an aircraft exceeding an operational threshold or failing to transmit a report;
      starting a countdown, in prescribed units, of a lead time from the alert to a compliance deadline to address the alert;
      calculating elapsed and remaining units, out of a total number of allotted units in the lead time, based on reports from a number of data sources on the aircraft that define an operating cycle of the aircraft system;
      displaying, in a user interface, the countdown as a normalized sliding scale of elapsed percentage of total number of allotted units in the lead time;
      displaying, in the user interface, the remaining units out the total number of allotted units; and ceasing the countdown in response to the first of:
   resolution of the alert; or the countdown reaching the compliance deadline, wherein the lead time has completely elapsed.
16. The computer program product of clause 15, wherein the units of the lead time comprise:
   elapsed hours; flight hours; or flight cycles.
17. The computer program product of clause 15 or 16, wherein the data sources that define the operating cycle of the aircraft system detect and report different flight phases of the aircraft.
18. The computer program product of any one of clauses 15-17, wherein the alert is triggered when a report for the aircraft system has not been received for a specified number of flight cycles.
19. The computer program product of any one of clauses 15-18, wherein resolution of the alert comprises receiving validation from a user that a condition underlying the alert is resolved.
20. The computer program product of any one of clauses 15-19, wherein resolution of the alert comprises resumed transmission of reports by the aircraft.

Many modifications and variations will be apparent to those of ordinary skill in the art. Further, different illustrative examples may provide different features as compared to other desirable examples. The example or examples selected are chosen and described in order to best explain the principles of the examples, the practical application, and to enable others of ordinary skill in the art to understand the disclosure for various examples with various modifications as are suited to the particular use contemplated.

## Claims

1. A computer-implemented method of tracking a maintenance compliance window of opportunity, the method comprising:
receiving (2802) an alert (102) in response to an aircraft system on an aircraft exceeding an operational threshold or failing to transmit a report;
starting (2804) a countdown (110), in prescribed units, of a lead time from the alert to a compliance deadline to address the alert;
calculating (2806) elapsed (114) and remaining units (116), out of a total number of allotted units (112) in the lead time, based on reports (106) from a number of data sources (104) on the aircraft that define an operating cycle (108) of the aircraft system;
displaying (2808), in a user interface (300), the countdown as a normalized sliding scale (304) of elapsed percentage of total number of allotted units in the lead time;
displaying (2810), in the user interface, the remaining units (306) out the total number of allotted units; and
ceasing (2816) the countdown in response to the first of:
resolution of the alert; or
the countdown reaching the compliance deadline,
wherein the lead time has completely elapsed.

2. The method of claim 1, wherein the units of the lead time comprise:
elapsed hours;
flight hours; or
flight cycles.

3. The method of claim 1 or 2, wherein the aircraft system comprises one of:
brakes;
tires; or
engine fuel filters.

4. The method of any one of the preceding claims, wherein the data sources that define the operating cycle of the aircraft system detect and report different flight phases of the aircraft.

5. The method of any one of the preceding claims, wherein the alert is triggered when a report for the aircraft system has not been received for a specified number of flight cycles.

6. The method of any one of the preceding claims, wherein resolution of the alert comprises receiving validation from a user that a condition underlying the alert is resolved.

7. The method of any one of the preceding claims, wherein resolution of the alert comprises resumed transmission of reports by the aircraft.

8. A system for tracking a maintenance compliance window of opportunity, the system comprising:
a storage device that stores program instructions;
one or more processors operably connected to the storage device and configured to execute the program instructions to cause the system to:
receive (2802) an alert (102) in response to an aircraft system on an aircraft exceeding an operational threshold or failing to transmit a report;
start (2804) a countdown (110), in prescribed units, of a lead time from the alert to a compliance deadline to address the alert;
calculate (2806) elapsed (114) and remaining units (116), out of a total number of allotted units (112) in the lead time, based on reports (106) from a number of data sources (104) on the aircraft that define an operating cycle (108) of the aircraft system;
display (2808), in a user interface (300), the countdown as a normalized sliding scale (304) of elapsed percentage of total number of allotted units in the lead time;
display (2810), in the user interface, the remaining units (306) out the total number of allotted units; and
cease (2816) the countdown in response to the first of:
resolution of the alert; or
the countdown reaching the compliance deadline,
wherein the lead time has completely elapsed.

9. The system of claim 8, wherein the units of the lead time comprise:
elapsed hours;
flight hours; or
flight cycles.

10. The system of claim 8 or 9, wherein the aircraft system comprises one of:
brakes;
tires; or
engine fuel filters.

11. The system of any one of claims 8-10, wherein the data sources that define the operating cycle of the aircraft system detect and report different flight phases of the aircraft.

12. The system of any one of claims 8-11, wherein the alert is triggered when a report for the aircraft system has not been received for a specified number of flight cycles.

13. The system of any one of claims 8-12, wherein resolution of the alert comprises receiving validation from a user that a condition underlying the alert is resolved; or optionally
wherein resolution of the alert comprises resumed transmission of reports by the aircraft.

14. A computer program product for tracking a maintenance compliance window of opportunity, the computer program product comprising:
a computer-readable storage medium having program instructions embodied thereon to perform the operations of:
receiving (2802) an alert (102) in response to an aircraft system on an aircraft exceeding an operational threshold or failing to transmit a report;
starting (2804) a countdown (110), in prescribed units, of a lead time from the alert to a compliance deadline to address the alert;
calculating (2806) elapsed (114) and remaining units (116), out of a total number of allotted units (112) in the lead time, based on reports (106) from a number of data sources (104) on the aircraft that define an operating cycle (108) of the aircraft system;
displaying (2808), in a user interface (300), the countdown as a normalized sliding scale (304) of elapsed percentage of total number of allotted units in the lead time;
displaying (2810), in the user interface, the remaining units (306) out the total number of allotted units; and
ceasing (2816) the countdown in response to the first of:
resolution of the alert; or
the countdown reaching the compliance deadline,
wherein the lead time has completely elapsed.

15. The computer program product of claim 15, wherein the units of the lead time comprise:
elapsed hours;
flight hours; or
flight cycles; or optionally
wherein the data sources that define the operating cycle of the aircraft system detect and report different flight phases of the aircraft; or optionally
wherein the alert is triggered when a report for the aircraft system has not been received for a specified number of flight cycles; or optionally
wherein resolution of the alert comprises receiving validation from a user that a condition underlying the alert is resolved; or optionally
wherein resolution of the alert comprises resumed transmission of reports by the aircraft.
